# EUROPÄISCHE PATENTSCHRIFT

(11) **EP 1 697 686 B1**
(45) Veröffentlichungstag und Bekanntmachung des Hinweises auf die Patenterteilung: **04.05.2011**
(21) Anmeldenummer: 04804236.0
(22) Anmeldetag: 22.12.2004
(51) Int. Cl.: F21V 8/00, F21V 5/04, F21W 131/406, F21V 14/06, G02B 3/08, F21S 8/10, F21V 14/02

(54) **Stufenlinsenscheinwerfer**
Lamp with stepped lens
Phare avec lentille à échelons

(30) Priorität: 22.12.2003 DE 10361121; 22.12.2003 DE 10361122; 22.12.2003 DE 10361117
(43) Veröffentlichungstag der Anmeldung: 06.09.2006
(73) Patentinhaber: Auer Lighting GmbH, 37581 Bad Gandersheim (DE)
(72) Erfinder: KITTELMANN, Rüdiger, 37574 Einbeck (DE); WAGENER, Harry, 31061 Alfeld (DE)
(74) Vertreter: Herden, Andreas F.
(86) Internationale Anmeldenummer: PCT/EP2004/014642
(87) Internationale Veröffentlichungsnummer: WO 2005/061956

(56) Entgegenhaltungen:
- EP-A- 1 167 868
- EP-A- 1 384 941
- DE-A1- 3 413 310
- DE-A1- 3 919 643
- DE-A1- 3 926 618
- US-A- 5 138 540
- US-A1- 2002 024 822
- US-A1- 2002 114 160
- US-A1- 2003 063 466
- US-B1- 6 499 862

## Beschreibung

Die Erfindung betrifft allgemein einen Stufenlinsenscheinwerfer mit zumindest einer Stufenlinse und im Besonderen eine Stufenlinse mit integrierter Streuscheibe für beleuchtungstechnische Zwecke.

Stufen- oder Fresnellinsen gehen auf den französischen Physiker Augustin Jean Fresnel zurück, welcher bereits im neunzehnten Jahrhundert dieses auch als Ringlinse bezeichnete optische Element schuf. Stufen- oder Fresnellinsen weisen, im Gegensatz zu den ansonsten verwendeten optischen Linsen mit Vollkörper konzentrische, im Wesentlichen senkrecht zur Hauptebene der Linse angeordnete Stufen auf, zwischen welchen sich ringförmige Abschnitte befinden. Die optisch wirksamen Oberflächen der ringförmigen Abschnitte entsprechen in ihrer Form in etwa der Form von Oberflächenabschnitten einer normalen Linse mit vollem Körper, liegen aber wesentlich näher an der gegenüberliegenden Oberfläche der jeweiligen Linse. Ferner werden die optisch im Wesentlichen nicht wirksamen Flächen der Stufen möglichst parallel zur Hauptlichtausbreitungsrichtung angeordnet, um möglichst geringe Reflexionen oder wenig unerwünschtes Streulicht zu erzeugen. Daher weist eine Fresnellinse näherungsweise, bis auf durch die Stufen hervorgerufene Störungen, ähnliche Abbildungseigenschaften wie eine normale Linse auf. Trotz dieser Störungen hat die Fresnellinse jedoch wesentliche Vorteile gegenüber herkömmlichen Linsen, welche diesen Linsentyp bei vielen Anwendungen zur deutlich bevorzugten oder auch zur einzig möglichen Wahl werden lässt. Fresnellinsen weisen eine geringere Dicke auf, benötigen weniger an optischem Material, sind folglich leichter und haben eine geringere Absorption und somit auch eine geringere Aufheizung insbesondere bei deren Verwendung in lichttechnischen Einrichtungen mit hohen Lichtintensitäten.

Sehr vorteilhaft werden Fresnellinsen beispielsweise bei Stufenscheinwerfern für Theater, Bühne, Studio, Film oder auch für architektonische Beleuchtungszwecke verwendet.

Durch die geringere Dicke der Fresnellinsen ist aber auch deren Herstellung oftmals wesentlich einfacher. Für das Prägen, Spritzgiessen oder Heissformen ist eine dünnere Fresnellinse in deren Abkühl- und Entformungsverhalten wesentlich besser zu beherrschen als deren Gegenstück mit vollem Volumen. Mit zunehmender Grösse dieser Linsen fallen diese Vorteile um so mehr ins Gewicht. Folglich sind bevorzugte Anwendungsgebiete die Beleuchtungstechnik, insbesondere im Theater, Studio, insbesondere für den Film auf der Bühne sowie in der Architektur, bei welchen eine hohe Lichtmenge häufig auch eine hohe thermische Belastung mit sich bringt aber Störungen der Abbildungseigenschaften weniger stark ins Gewicht fallen.
Aus der Signaltechnik des schienengeführten Verkehrs ist eine Stufenlinse mit einer zentral angeordneten, das Licht vorzugsweise in den unteren Halbraum richtenden parallelen Prismenanordnung bekannt, welche dazu verwendet wird, einen Teil des in die Stufenlinse eintretenden Lichts für die Signalerkennbarkeit im Nahbereich zur Verfügung zu stellen.

In der WO 01/86341 A1 wird ein Signalgeber mit einer Stufenlinse mit Zerstreuungselementen kürzerer Brennweite beschrieben, bei welcher die kurzbrennweitigen Zerstreuungselemente den Leuchtwinkel des abgestrahlten Lichtes erweitern. Die vollflächig an der Stufenlinse angeordneten Zerstreuungselemente gestatten jedoch keine Änderung des Lichtstroms, insbesondere von dessen Öffnungswinkel durch eine Verlagerung der Intensität des die Stufenlinse beleuchtenden Lichtes am Ort der Stufenlinse.

In EP 0 391 287 wird eine Operationsleuchte beschrieben, welche einen hyperbolischen Spiegel und eine lichtaustrittsseitige Linsenanordnung mit mindestens drei Fresnellinsen verschiedener Brennweite umfasst. Durch die unterschiedlichen Brennweiten der Stufenlinsen wird erreicht, dass über einen relativ grossen Tiefenbereich eine homogene Lichtstärke und damit eine homogene Ausleuchtung einer tiefen Operationswunde möglich ist. Vorzugsweise sechseckige Vielecke mit kleinerer Strukturgrösse als die Struktur der verwendeten Stufenlinsen dienen einer weiteren Homogenisierung innerhalb des Leuchtfeldes. Eine Änderung des Öffnungswinkels des austretenden Lichtfeldes oder der Grösse des beleuchteten Felds wird mit dieser Anordnung jedoch nicht bewirkt und soll mit anderen, zusätzlichen Maßnahmen erhalten werden. Hierfür werden jedoch zusätzliche Bauteile erforderlich.

Ein optisches System für Stufenlinsenscheinwerfer ist in der EP 1 242 399 A2 erwähnt, welches von den Erfindern der vorliegenden Anmeldung erfunden wurde, und bei welchem der Öffnungswinkel des austretenden Lichtes durch eine Verstellung des Abstands der Lampe relativ zu dem Reflektor dieses Systems bewirkt wird. Hierbei wird jedoch eine in der Regel sehr heisse Lampe mechanisch relativ zum Reflektor bewegt, welches für deren Verstellung erheblichen mechanischen Aufwand erfordert. Zum einen ist sicherzustellen, dass die in heissem Zustand stärker erschütterungsempfindliche Lampe nicht geschädigt wird zu anderen müssen die Verstellelemente sowohl eine hohe Temperatur- als auch Temperaturwechselbeständikgeit aufweisen.

JP 61 097 602 A betrifft einen Schirm, wie beispielsweise die Mattscheibe einer Spiegelreflexkamera, bei welcher häufig die Randbereiche dunkler als deren Mitte erscheinen, da am Rand schräg einfallende Strahlen des Bildfelds dazu neigen, auch nach Durchtritt durch die Mattscheibe weiter schräg von der Mitte weg auszutreten. Dieses Dokument lehrt zur Verbesserung der Helligkeit des Randbereichs des Bildschirms, jedoch ohne Senkung der Helligkeit des mittleren Bereichs, den zentralen Bereich der zugeordneten Fresnellinse mit streuenden Elementen so auszustatten, dass die gesamte Bildfläche dieses Schirms gleichförmig ausgeleuchtet ist. Eine Änderung des Öffnungswinkels des austretenden Lichtfeldes oder der Grösse des beleuchteten Felds wird mit dieser Anordnung jedoch nicht bewirkt und wäre in einem derartigen System auch nicht sinnvoll.

DE 38 06 879 C1 offenbart eine optische Filterlinse, bei der zwecks Realisierung eines möglichst gleichförmigen Intensitätsprofils zu sensorischen oder zu messtechnischen Zwecken im Lichtfeld einer Fresnellinse, diese Fresnellinse mit radial verlaufenden Strukturen versehen wird, welche verhindern sollen, dass die Intensität in der Mitte des Lichtfelds zunimmt. Hierbei wird das Licht aus den radial verlaufenden Strukturen nicht mehr auf dem Sensor abgebildet. Eine derartige Anordnung ist jedoch für beleuchtungstechnische Anwendunge nachteilig denn es kommt durch die nichtabbildbaren Bereiche zu unerwünschten Lichtverlusten. Ferner ist es für Beleuchtungseinrichtungen, beispielsweise im Studio-, Theater-, Film und Architekturbereich häufig hocherwünscht, durch einen helleren mittleren Bereich eine gewollte Betonung bestimmter Bereiche des beleuchteten Objekts herbeizuführen.

Es wäre vorteilhaft, eine Stufenlinse, in deren Verwendbarkeit, insbesondere für lichttechnische Anwendungen weiter zu verbessern und insbesondere durch Verwendung einer solchen Stufenlinse den Aufbau lichttechnischer Einrichtungen zu vereinfachen.

Wird bei der hier beschriebene optischen Anordnung für beleuchtungstechnische Zwecke, insbesondere für einen Stufenlinsenscheinwerfer, eine Streuscheibe in einem ersten Bereich und eine Stufenlinse in einem zweiten Bereich angeordnet,
kann auf überraschend einfache und extrem flexible Weise mit der Änderung der Form des auf die optische Anordnung auftreffenden Lichts und/oder der Grösse des die optische Anordnung beleuchtenden Lichts der Öffnungswinkel α des aus der optischen Anordnung austretenden Lichts verändert, insbesondere zwischen zwei Grenzwerten, einem kleineren αₛₚ und einem grösseren α_{F1}, eingestellt werden.

Hierdurch werden, insbesondere bei Verwendung dieser optischen Anordnung in einem Stufenlinsenscheinwerfer, Bauformen mit verminderter Anzahl von mechanischen Bauelementen sowie stark erhöhter Lichtausbeute ermöglicht.

Auf einfache Weise wird eine Änderung des Lichtmischverhältnis von geometrisch optisch geführtem durch die Stufenlinse getretenem Licht relativ zu dem durch die Streuscheibe getretenen Licht ermöglicht.

Ein grosser Vorteil besteht darin, dass bei Durchfahrung der optischen Anordnung mit einem beleuchtenden Lichtkegel einzig durch Veränderung der Position des Lichtkegels relativ zur optischen Anordnung, eine Änderung des Leuchtwinkels, beispielsweise von 8° bis 60 °, von 8° bis 70° oder sogar von 4° bzw. 8° bis 80° bei homogener Änderung der Lichtverteilung erreicht werden.

Hierbei ist der Offnungswinkel, als derjenige Winkel definiert, bei welchem von der optischen Achse des Systems aus gemessen, die Lichtintensität auf den zehnten Teil der Intensität abgefallen ist, relativ zu der Lichtintensität in Richtung der optischen Achse.

In überraschend einfacher Weise ist es möglich, hierbei den Öffnungswinkel stetig zu ändern und dabei stets eine homogene Ausleuchtung innerhalb des beleuchteten Winkelbereichs aufrecht zu erhalten.

Die Kombination aus geometrisch-optischer Abbildung der Stufenlinse mit einer dieser überlagerten Streukeule des an der Streuscheibe gestreuten Lichts gestatten es auch, lichttechnische Beleuchtungslichtverteilungen zu erreichen, bei welchen nicht nur das Lichtquellen- oder Leuchtkörperabbild unterdrückt werden kann sondern es können bei geeigneter Wahl der streuenden Struktur und deren geometrischer Abmessung sogar Fehler von beleuchtenden Strahlengängen stark gemindert oder vermieden werden.

Eine besonders interessante Anwendung ergibt sich bei Reflektoranordnungen mit einer im Verhältnis zu deren Fassung relativ kleinen Lichtquelle, wie beispielsweise einer Hochdruckentladungslampe, welche Emissionsbereiche in der Grössenordnung einiger Millimeter und deutlich grössere Fassungsdurchmesser aufweisen, Bei derartigen Lichtquellen kann es zu einer Abdunkelung des zentralen Lichtfelds dadurch kommen, dass die durch den Reflektor tretende Fassung eine Öffnung innerhalb des Reflektors benötigt, welche deutlich grösser als die Lichtquelle ist und somit Lichtstrahlen nahe der optischen Achse innerhalb diese Öffnung nicht reflektiert werden können. Durch geeignete Wahl der Vorwärtsstreukeule der Licht streuenden Einrichtung, vorzugsweise einer kreisförmigen zentralen Streuscheibe, können in überraschender Weise im Wesentlichen die geometrisch optischen Eigenschaften der Stufenlinse erhalten und kann dennoch ein zentraler Intensitätsabfall vermieden werden.

In vorteilhafter Weise ist dabei die optische Anordnung einstückig ausgebildet, um sowohl die Stufenlinse als auch die Streuscheibe in einem einzigen Prägevorgang fertigungstechnisch günstig zu erzeugen.

Gemäß der Erfindung nehmen der erste und der zweite Bereich, welche jeweils der Stufenlinse und der Streuscheibe zukommen, reale konzentrisch angeordnete Oberflächen mit verschiedenen Durchmessern (2RStl, 2RstrA) ein.

Das Verhältnis der Oberflächengrösse von Stufenlinsenoberfläche zu Streuscheibenoberfläche kann dabei in weiten Bereichen das Verhältnis der jeweils wirksam werdenden Anteile des austretenden, für beleuchtungstechnische Zwecke nutzbaren Lichts definieren und ist wahlweise grösser als 2 zu 1 (Stufenlinsenoberfläche zu Streuscheibenoberfläche), vorzugsweise ist das Verhältnis der Oberflächengrösse von Stufenlinsenoberfläche zu Streuscheibenoberfläche grösser als 10 zu 1 und am bevorzugtesten ist das Verhältnis der Oberflächengrösse von Stufenlinseoberfläche zu Streuscheibenoberfläche grösser als 100 zu 1.

Die Oberfläche der Stufenlinse oder der Streuscheibe ist im Sinne dieser Beschreibung nicht die tatsächliche Oberfläche mit allen mikroskopischen und makroskopischen Erhebungen und Vertiefungen sondern ist diejenige Fläche, welche bei Beleuchtung parallel zur optischen Achse in einer senkrecht zur optischen Achse verlaufenden und unmittelbar hinter der optischen Anordnung angeordneten Ebene der Fläche des Schattenwurfs der Stufenlinse oder der Streuscheibe entspricht.

In äusserst vorteilhafter Weise kann der Öffnungswinkel des aus der Streuscheibe austretenden Lichts in vertikaler Richtung verschieden von dem Öffnungswinkel in horizontaler Richtung sein und es kann hiermit durch die Streuscheibe wahlweise ein unrund, ellipsoid, vieleckig und insbesondere rechteckig und/oder quadratisch ausgeleuchtetes Lichtfelder entstehen.

Rechteckförmige und insbesondere auch quadratische Lichtfelder lassen eine Anreihung mehrerer Lichtfelder zu, wodurch grosse Areale, beispielsweise im Studio, auf der Bühne oder der Architekturbeleuchtung, homogen ausgeleuchtet werden können.

In Abhängigkeit von der beleuchteten Fläche der Streuscheibe können auch Übergänge von rund ausgeleuchteten zu unrund, ellipsoid, vieleckig und insbesondere rechteckig und quadratisch ausgeleuchteten Lichtfelder entstehen, wenn die Streuscheibe beispielsweise mehrere Bereiche, insbesondere ringförmige Oberflächenbereiche enthält, welche Licht jeweils in verschiedene Richtungen oder unterschiedlich stark streuen.

In diesem Fall kann das runde Lichtfeld der Spotstellung bei Verstellung beispielsweise in ein unrundes, beispielsweise quadratisches Lichtfeld übergehen, wenn der Lichtkegel zwar noch den gesamten Streuscheibendurchmesser R_{StrA} aber nicht mehr die Stufenlinse erfasst. Bei weiterer Verstellung und kleiner werdendem Lichtkegel kann das Lichtfeld nochmals in ein anders geformtes, beispielsweise elliptisches Lichtfeld übergehen, wenn der Lichtkegel nur noch einen inneren Durchmesser R_{strI} erfasst, dessen Anteile das Licht nur noch in das elliptische Lichtfeld lenken.

Auf diese Weise kann die Form des ausgeleuchteten Lichtfelds flexibel verstellt werden.

Ferner lässt die Unterteilung der Streuscheibe in Bereiche mit verschiedenem Streuverhalten auch zu, dass die Art des Lichteinfalls steuerbar wird. Es kann das runde Lichtfeld der Spotstellung bei Verstellung beispielsweise zunächst in ein quadratisches Lichtfeld mit weichem Randabfall übergehen, wenn der Lichtkegel zwar noch den gesamten Streuscheibendurchmesser R_{strA} aber nicht mehr die Stufenlinse erfasst und bei weiterer Verstellung und kleiner werdendem Lichtkegel kann das Lichtfeld in ein Lichtfeld mit hartem Randabfall übergehen, wenn der Lichtkegel nur noch einen inneren Durchmesser R_{strI} erfasst, dessen Anteile das Licht nur noch in das quadratische Lichtfeld aber sehr viel exakter nur noch in dieses lenken.

Vorteilhaft ist für einen Stufenlinsenscheinwerfer mit elliptischem Reflektor mit einer Elliptizität ε das Verhältnis von Brennweite zu Radius nₛₜₗ = Rₛₜₗ/Fₛₜₗ der Stufenlinse grösser als 0,5 mal 1/sqrt(ε²-1), vorzugsweise grösser als 0,7 mal 1/sqrt(ε²-1), am bevorzugtesten grösser als 0,9 mal 1/sqrt (ε²-1).

Bevorzugt ist die Stufenlinse eine asphärische Linse, um Kugelgestaltfehler zu kompensieren und zu einer möglichst guten Abbildungsleistung zu gelangen.

Falls die Stufenlinse einen Grundkörper mit einer optisch strahlformend wirksamen, im Wesentlichen konkaven Oberfläche aufweist, kann dergestalt komplexeren optischen Anforderungen Rechnung getragen werden, da hierdurch beispielsweise konkav-konvexe oder bikonkave Linsen definiert werden können, bei welchen die Stufenlinse und auch deren Grundkörper geometrisch-optisch wirksam werden.

Ferner kann die Stufenlinse einen Grundkörper mit einer im Wesentlichen konvexen Oberfläche aufweisen, um somit konvex-konkave oder bikonvexe Linsen zu schaffen.

Näherungsweise kann die Form des Grundkörpers eigenständig optisch strahlformend genutzt werden und können die strahlformenden Eigenschaften der Stufenlinse in Kombination oder überlagert genutzt werden.

Hierbei wird als Grundkörper der Stufenlinse derjenige Teil verstanden, welcher sich ergäbe, wenn von der Stufenlinse deren Stufen entfernt würden, dies bedeutet das Volumenmaterial, auf welchem die Stufen der Stufenlinse aufgebracht oder in welches diese Stufen eingeprägt sind.

Es ist somit fertigungstechnisch möglich, zunächst die Form der erwünschten Stufenlinse zu berechnen und zusätzliche optische strahlformende Eigenschaften durch die weiter Ausgestaltung des Grundkörpers, vorzugsweise in plankonkaver, plankonvexer, bikonkaver, bikonvexer oder konkav-konvexer Form, zu erlangen.

Wenn die im Wesentlichen ringförmigen, optisch wirksamen Oberflächen der Stufen als Kreisbogenoberflächenabschnitte gestaltet sind, können fertigungstechnisch einfach zu realisierende Geometrien genutzt werden, welche dennoch optisch noch relativ gute Eigenschaften aufweisen.

Bei einer einfachen, kostengünstigen Ausführungsform sind die im Wesentlichen ringförmigen, optisch wirksamen Oberflächen der Stufen kegelmantelförmig ausgebildet.

Das Optimum optischer Abbildungsleistung wird jedoch im Wesentlichen bei einer sammelnden Stufenlinse, somit einer Linse mit positiver Brennweite und reellem Brennpunkt, erreicht, wenn die im Wesentlichen ringförmigen, optisch wirksamen Oberflächen der jeweiligen Stufen so geformt sind, dass eine in etwa ebene Welle mit zur optischen Achse senkrechten Phasenfronten die Linse dann verlässt, wenn in diese Licht eintritt, welches aus einem einzigen reellen Brennpunkt stammt. Im Fall einer streuenden Linse, somit einer Linse mit negativer Brennweite und virtuellem Brennpunkt, wird das Optimum dann erreicht, wenn das Licht einer ebenen Welle, welches in die Stufenlinse eintritt in eine Kugelwelle umgeformt wird, deren Mittelpunkt aus einem einzigen virtuellen Brennpunkt zu stammen scheint.

Bei einer besonders bevorzugten Ausführungsform ist die Streuscheibe nur in einem mittleren Bereich der Stufenlinse und vorzugsweise auf der Seite der Stufen angeordnet, da diese Ausführungsform bereits mit einem einzigen Heissformungsschritt mit hoher Präzision herstellbar ist.

Sehr vorteilhaft ist es, wenn die Streuscheibe in einem mittigen Bereich der Stufenlinse abgegrenzt angeordnet ist, denn dann kann hierdurch eine überraschend variable Intensitätsverteilung bei lichttechnischen Beleuchtungseinrichtungen erzeugt werden. So kann beispielsweise durch Verwendung von Blenden oder durch eine geänderte Fokussierung des eintretenden Lichtfelds dessen Durchmesser variiert und ein variabel einstellbarer Übergang von gestreutem zu geometrisch-optisch abgebildetem Licht geschaffen werden. Solange nur Licht die innere Streuscheibe trifft, definieren deren Eigenschaften die Form des austretenden und beleuchtenden Lichtfelds. Wenn bei Vergrösserung des Durchmessers des Lichtfelds zunehmend geometisch-optische Abbildungseigenschaften hinzutreten, kann beispielsweise eine sehr gleichmässige Vergrösserung des beleuchtenden Lichtkegels erreicht werden.

Ein noch stetigerer und weicherer Übergang der zu ändernden Lichtverteilung kann erreicht werden, wenn das das Licht streuenden Element verschieden stark streuende Bereiche, vorzugsweise einen mittig stärker streuenden und einen randseitig weniger stark streuenden Bereich aufweist.

Bevorzugt wird die Streuscheibe je nach deren Material an deren Streuverhalten angepasst durch Heissformgebung, insbesondere, Prägen, und/oder Spritzgiessen hergestellt.

Bevorzugte Materialien für die Stufenlinse und/oder die Streuscheibe sind Glas und glakeramische Materialien. Besonders vorteilhaft ist bei Glaskeramiken die hohe Temperaturwechselbeständigkeit.

Ferner kann die optische Anordnung mit Stufenlinse und Streuscheibe aus mehreren Elementen zusammengesetzt, um beispielsweise verschiedene Fertigungsverfahren und deren Vorteile zu nutzen.

So kann eine, insbesondere geprägte Kunststoff-Stufenlinse mit einer aus Glas bestehenden Streuscheibe verbunden werden, wodurch sich ein hybrider Verbund aus Glas und Kunststoff ergibt.

Wenn die Stufenlinse ein Material umfasst mit einem ersten Dispersionsverhalten und eine weitere Linse mit entgegengesetzter Brechkraft, vorzugsweise eine Stufenlinse, mit einem Material mit einem zweiten Dispersionsverhalten, können sogar chromatisch korrigierte oder achromatische Linsensysteme geschaffen werden.

Als optische Weglänge wird im Sinne dieser Beschreibung die Wellenlänge eines zentralen Bereichs des jeweils verwendeten Lichtspektrums angesehen.

Wenn die Stufenlinse eine geprägte Kunststofflinse ist, kann es sehr vorteilhaft sein, wenn diese einen optischen Weglängenunterschied an der jeweiligen Stufe von weniger als etwa 1000 optischen Wellenlängen aufweist, da dann in der Regel eine relativ flache Stufenlinse verwirklicht werden kann, durch welche nur geringe Störungen der geometrisch-optischen Lichtausbreitung hervorgerufen werden.

Ferner kann es bei lokal hohen Lichtintensitäten konstruktionsabhängig sehr sinnvoll sein, nicht wie herkömmlich Gelatinefilter zu verwenden, welche im Bereich starker Lichtintensität, wie beispielsweise in der Nähe von reellen Brennpunkten zügig ausbleichen oder sogar schmelzen und entflammen können sondern beschichtete oder gefärbte Gläser zu verwenden.

Wird somit die Stufenlinse und/oder die Streuscheibe als Filter, insbesondere als UV-, IR- oder farbiges Bandfilter und/oder Konversionsfilter ausgebildet, kann eine sehr viel zuverlässigere und exaktere Filterung des Lichts bereitgestellt werden. Ferner liegt es im Rahmen dieser Ausgestaltung, Sätze von optischen Anordnungen herzustellen, welche, vorzugsweise mit dichroitischen bzw. Interferenz-Filterschichten auf definierte Lichttemperaturen für definierte Lichtquellen abgestimmt sind.

So kann beispielsweise eine definierte Farbverschiebung in Richtung niedrigerer Farbtemperaturwerte einer Hochdruckentladungslampe das Spektrum eines Schwarzkörperstrahlers, wie beispielsweise eine -Glühlampe verleihen.

Ferner können spektral dominierende Banden angeregter Entladungslinien definiert gemildert werden und somit eine homogenere spektrale Verteilung erreicht werden.

Zusätzlich können mit derartigen Filteranordnungen für vorgegebene Spektren von Lichtquellen auch Lichtstimmungen in deren spektraler Verteilung simuliert werden, wie beispielsweise Morgenlicht, Abendlicht, Gewitter- oder Unwetterlicht, so dass mit einer einzigen Lichtquelle und einem zugeordneten Satz optischer Anordnungen den meisten Anforderungen im Studio-, Theater-, Film und Architekturbereich genügt werden kann.

Da dichroitische oder Interferenzfilter hohen Strahlungsintensitäten mit grosser spektraler Präzision dauerhaft standhalten, können diese je nach Anwendung nicht nur spektral besser sondern durch deren lange Lebensdauer sogar auch preisgünstiger als herkömmliche Farbfilterfolien sein. Ferner sind raue Umgebungsbedingungen, wie beispielsweise bei der Architekturbeleuchtung oder bei Aussenaufnahmen ein weiterer Grund für den Einsatz derartiger optische Anordnungen.

Besonders vorteilhaft ist es bei Verwendung von Kunststofflinsen und/oder -streuscheiben, wenn diese mit einer mechanischen Kratzschutzschicht beschichtet sind.

Ferner können unerwünschte Reflexionen, insbesondere an den Stufenflächen, nicht nur dazu führen, dass Licht aus dem Hauptlichtstrom verloren geht, sondern es können sich sogar in der Beleuchtungsebene hellere Kreise oder Punkte ausbilden, welche durch eine Antireflexschicht auf diesen Stufenflächen stark gemindert oder sogar unterdrückt werden können.

Mit der hier beschriebenen optischen Anordnung für beleuchtungstechnische Zwecke, insbesondere für einen Stufenlinsenscheinwerfer, mit Stufenlinse und Licht streuendem Element kann sehr vorteilhaft ein Stufenlinsenscheinwerfer geschaffen werden, der einen variablen Öffnungswinkel des austretendem Lichts und in jeder Einstellung des Öffnungswinkels bei hohem Wirkungsgrad ein homogen ausgeleuchtetes Lichtfeld bereitstellt.

Erfindungsgemäss wird diese Aufgabe auf überraschend einfache Weise mit einem Stufenlinsenscheinwerfer gemäss Anspruch 1 gelöst.

Die Erfinder haben herausgefunden, dass die herkömmlichen hohen Lichtverluste von Stufenlinsenscheinwerfern auf überraschend einfache Weise mit einer Streuscheibe vermieden werden können. Besonders vorteilhaft ist es hierbei, wenn die Stufenlinse eine Streuscheibe aufweist, welche in besonders bevorzugter Weise kreisförmig ausgebildet und nur noch im Zentrum der Stufenlinse angeordnet ist.

Bei dieser Ausführungsform können in jeder Stellung des Stufenlinsenscheinwerfers die dunklen Bereiche in der Mitte des Beleuchtungsfelds sehr wirksam vermieden werden, aber es kommt dennoch nicht mehr zu den hohen Lichtverlusten in der Spotstellung des Reflektors.

In überraschender Weise zeigt es sich, dass der geometrisch-optische Strahlengang des aus dem Reflektor austretenden Lichts am Ort der Stufenlinse genau dann einen kleineren Bereich ausleuchtet, wenn der benötigte Anteil an gestreutem Licht erhöht ist.

Diese Wirkung haben sich die Erfinder zu nutze gemacht, um mit der Erfindung ein automatisches oder adaptives Lichtmischsystem zu schaffen, welches synchron zu der Verstellung des Stufenlinsenscheinwerfers nur denjenigen Streulichtanteil zum geometrisch-optisch abgebildeten Licht hinzu mischt, welcher für diese Stellung benötigt wird.

Dieses Lichtmischverhältnis, welches nahezu optimal an die jeweils erforderlichen Lichtverteilungen adaptiert werden kann, wird nachfolgend abgekürzt nur noch als Mischverhältnis bezeichnet.

Durch dieses automatische Lichtmischsystem wird im Wesentlichen für jede Stellung des Reflektors das richtige Mischverhältnis und somit stets ein sehr homogen ausgeleuchtetes Lichtfeld geschaffen ohne dass hierbei jedoch unnötige Streuverluste auftreten.

Hierbei kann durch die Wahl des Durchmessers der Streuscheibe im Verhältnis zur verbleibenden Fläche der Stufenlinse das Mischverhältnis der vollflächig ausgeleuchteten Stufenlinse definiert werden und kann durch die Streueigenschaften der Stufenlinse der Öffnungswinkel des gestreuten Lichts in weiten Bereichen frei definiert werden

Ferner kann auf der integrierten Streuscheibe selbst die streuende Wirkung variieren, so dass beispielsweise in der Mitte der Streuscheibe stärker streuende Bereiche und an deren Rand weniger stark streuende Bereiche angeordnet sind. Hierdurch wird ein stärker fokussiertes Strahlenbündel zusätzlich noch aufgeweitet und es lassen sich dann extrem breite Ausleuchtungswinkel realisieren.

Alternativ kann auch der Rand der Streuscheibe nicht nur abrupt endend ausgestaltet sein sondern es kann dieser in dessen streuender Wirkung stetig abnehmend gestaltet sein und sich noch unter oder über der Stufenlinse erstrecken Hierdurch lassen sich weitere Anpassungen an die stellungsabhängigen Mischverhältnisse vornehmen.

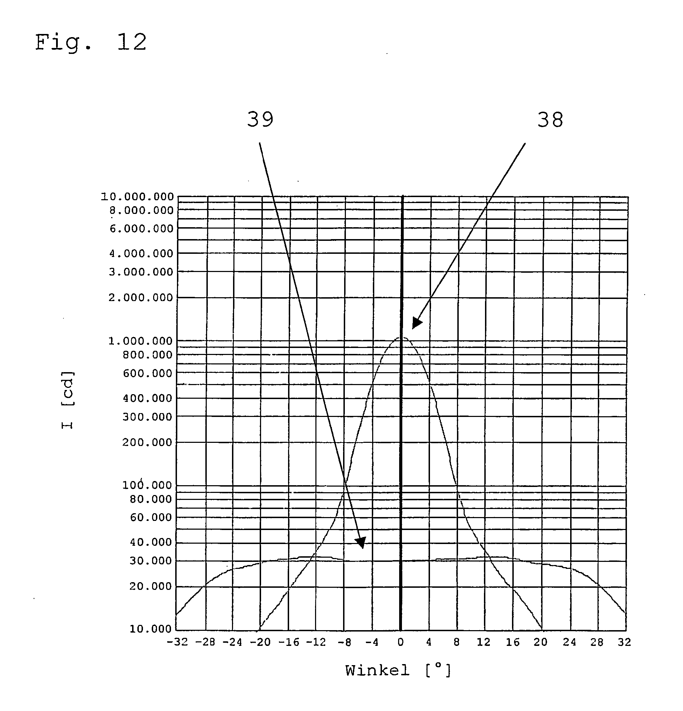

Gleichzeitig wird die Gleichmässigkeit der Beleuchtungsstärke im gesamten Lichtfeld erhalten, wie dieses beispielhaft in Figur 12 sowohl für die Spot- als auch für eine Floodstellung dargestellt ist.

Erfindungsgemäss ist ein ellipsoider Reflektor mit grosser Apertur vorgesehen. Die Spotstellung wird dadurch eingestellt, dass sich die Lampenwendel eines Schwarzkörperstrahlers, insbesondere einer Halogenlampe oder der Entladungsbogen einer Entladungslampe im reflektorseitigen Brennpunkt des Ellipsoids befindet und der reflektorferne zweite Brennpunkt des Ellipsoids in etwa im reellen reflektornahen Brennpunkt der Stufenlinse angeordnet ist.

Das von dem Reflektor reflektierte Licht wird vor Eintritt in die Stufenlinse nahezu vollständig auf den reflektorfernen Brennpunkt des Ellipsoids fokussiert. Die sich im reflektorseitigen Brennpunkt der Stufenlinse befindliche Lampenwendel oder der Entladungsbogen wird nach dem Hindurchtreten durch die Stufenlinse in das Unendliche abgebildet und wird somit deren Licht in ein nahezu paralleles Strahlenbündel überführt.

Bei zweckmässiger Wahl des Aperturwinkels von Reflektor und Stufenlinse wird das von dem Reflektor reflektierte Licht nahezu vollständig von der Stufenlinse erfasst und als enges Spot-Lichtbündel nach vorne abgestrahlt.

Der Öffnungswinkel des aus der Stufenlinse austretenden Lichtbündels kann bei einer weiteren, jedoch mechanisch weit auf wendigeren Ausführungsform nahezu beliebig vergrössert werden, indem die Lampenposition in Bezug zum Reflektor einerseits und der Abstand der Stufenlinse zum Reflektor andererseits in geeigneter Weise verändert wird.

Damit die guten Eigenschaften herkömmlicher Stufenlinsenscheinwerfer in Bezug auf die Gleichmässigkeit der Beleuchtungsstärke erhalten bleiben, sollten diese Abstandsveränderungen durch eine zweckmässig gewählte Zwangskoppelung erfolgen.

Generell können sowohl der Reflektor, die Stufenlinse und/oder die Streuscheibe zumindest einseitig beschichtet sein, beispielsweise im Falle von Kunststoff mit einer Antikratz und/oder Antireflexschicht beschichtet sein.

Eine bevorzugte Ausführungsform der Erfindung umfasst einen Stufenlinsenscheinwerfer, bei welchem die lichtreflektierende Oberfläche des Reflektors, vorzugsweise Teilflächen oder Facetten aufweisend, lichtstreuend strukturiert ist und keine, eine oder zwei Oberflächen der Stufenlinse lichtstreuend strukturiert sind. Hierdurch kommt es zu einem festgelegten Anteil der Überlagerung gestreuten Lichts zu geometrisch-optisch abgebildetem Licht, welcher dunkle Ringe im Lichtfeld mindern kann.

Erfindungsgemäss ist die Verwendung des Scheinwerfers vorteilhaft für Architektur, Medizin, Film, Bühne, Studio und Fotografie sowie in einer Taschenlampe vorgesehen.

Die Erfindung wird nachfolgend anhand bevorzugter Ausführungsbeispiele und unter Bezugnahme auf die beigefügten Zeichnungen detaillierter erläutert.

Es zeigen:
- Fig. 1: eine erste Ausführungsform der optischen Anordnung einer Stufenlinse mit einer in etwa mittig angeordneten, im Wesentlichen kreisförmigen Streuscheibe, welche einzelne, zueinander leicht verdrehte Facetten aufweist,
- Fig. 2: eine zweite Ausführungsform der optischen Anordnung einer Stufenlinse mit einer in etwa mittig angeordneten, im Wesentlichen kreisförmigen Streuscheibe, welche Facetten aufweist, die durch ein Monte-Carlo-Verfahren aus deren regelmässiger Lage versetzt wurden,
- Fig. 3: eine dritte Ausführungsform einer Stufenlinse mit einer in etwa mittig angeordneten, im Wesentlichen kreisförmigen Streuscheibe, bei welcher die einzelnen Facetten der Streuscheibe auf einer archimedischen Spirale liegen,
- Fig. 4: einen Querschnitt durch eine Plankonvexlinse mit zentraler Streuscheibe, deren Grundkörper im Wesentlichen Plan und deren Stufenlinse konvex ausgebildet ist,
- Fig. 5: einen Querschnitt durch eine bikonkave Stufenlinsenanordnung, welche geometrisch-optische strahlerweiternde oder lichtstreuende Eigenschaften hat und bei welcher sowohl der Grundkörper als auch deren geometrisch-optisch wirksames Stufenlinsensystem im Wesentlichen konkav ausgestaltet ist,
- Fig. 6: eine Ausschnittsvergrösserung eines oberen Abschnitts der Querschnittsdarstellung von Fig. 4,
- Fig. 7: eine Querschnittsdarstellung einer konvexkonkaven Stufenlinsenanordnung, deren Grundkörper konkav und deren geometrisch-optisch wirksames Stufenlinsensystem im Wesentlichen konvex ausgestaltet ist,
- Fig. 8: eine Querschnittsdarstellung einer Hybridlinsenanordnung aus einer geprägten plankonvexen Kunststoff- Stufenlinsenanordnung, welche an einer aus Glas bestehenden Streuscheibe angebracht ist,
- Fig. 9: eine Querschnittsdarstellung eines Hybridlinsen- Achromaten, bei welchem eine aus Glas bestehende Plankonvexlinse mit einer aus Kunststoff oder einem Glas mit anderer Dispersion bestehenden Bikonkav-Stufenlinse verbunden
- Fig. 10: eine Ausführungsform eines Stufenlinsen- scheinwerfers mit einer Stufenlinse mit positiver Brechkraft in Spotstellung, wobei der reflektorferne Brennpunkt des Reflektors in etwa mit dem linksseitigen, reellen Brennpunkt der Stufenlinse überlagert ist,
- Fig. 11: die in Fig. 10 gezeigte Ausführungsform des Stufenlinsenscheinwerfers in einer ersten Floodstellung, wobei der reflektorferne Brennpunkt des Reflektors nahe einer Oberfläche der Stufenlinse angeordnet ist,
- Fig. 12: eine öffnungswinkelabhängige logarithmische Darstellung der Lichtstärke des Stufenlinsen-scheinwerfers in dessen Spot- und in einer von dessen Floodstellungen
- Fig. 13: eine Ausführungsform eines Stufenlinsenscheinwerfers mit einer Stufenlinse mit negativer Brechkraft in Spotstellung, wobei der reflektorferne Brennpunkt des Reflektors in etwa mit dem rechtsseitigen virtuellen Brennpunkt der Stufenlinse überlagert ist,
- Fig. 14: die in Fig. 13 gezeigte Ausführungsform des Stufenlinsenscheinwerfers in einer ersten Floodstellung, wobei der reflektorferne Brennpunkt des Reflektors in etwa in einer reflektornahen Oberfläche der Stufenlinse angeordnet ist,
- Fig. 15: eine öffnungswinkelabhängige logarithmische Darstellung der Lichtstärke des Stufenlinsenscheinwerfers in dessen Spot- und in einer von dessen Floodstellungen.

### Detaillierte Beschreibung bevorzugter Ausführungsformen

Der Erfindung wird nachfolgend unter Bezugnahme auf bevorzugte Ausführungsformen detaillierter beschrieben.

Bei dieser Beschreibung wird generell angenommen, dass sich in die Linse eintretendes Licht in den Zeichnungen von der linken Seite kommend zur rechten Seite hin ausbreitet.

Ferner werden bei der Beschreibung der verschiedenen Ausführungsformen gleiche Bezugszeichen für gleiche oder im Wesentlichen gleich wirkende Bestandteile der optischen Anordnung 1 verwendet.

Der Inhalt der prioritätsbegründenden Voranmeldungen, DE 103 61 122 sowie DE 103 61 117, jeweils mit dem Titel "Stufenlinsenscheinwerfer mit gekoppelter Abstandsveränderung lichttechnische Elemente" wird durch Bezugnahme in vollem Umfang auch zum Inhalt der vorliegenden Anmeldung gemacht.

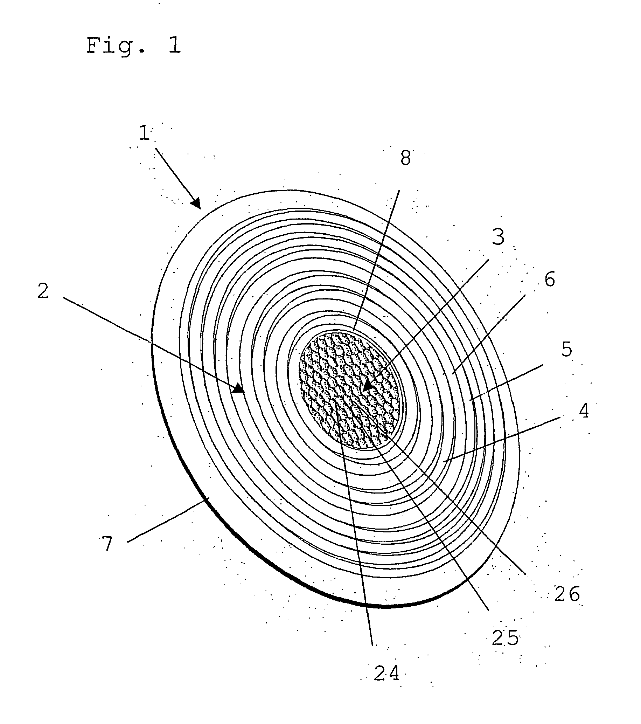

Nachfolgend wird auf Fig. 1 Bezug genommen, welche eine erste Ausführungsform der optischen Anordnung einer Stufenlinse mit einer in etwa mittig angeordneten, im Wesentlichen kreisförmigen Streuscheibe, welche einzelne, zueinander leicht verdrehte Facetten aufweist, zeigt

Die im ganzen mit 1 bezeichnete optische Anordnung umfasst eine Stufenlinse 2, sowie eine in deren mittlerem Bereich angeordnete Streuscheibe 3.

Die Stufenlinse 2 weist konzentrisch angeordnete, ringförmige Stufen mit optische wirksamen Oberflächenbereichen auf, die in Fig. 1 lediglich beispielhaft mit dem Bezugszeichen 4, 5 und 6 versehen sind.

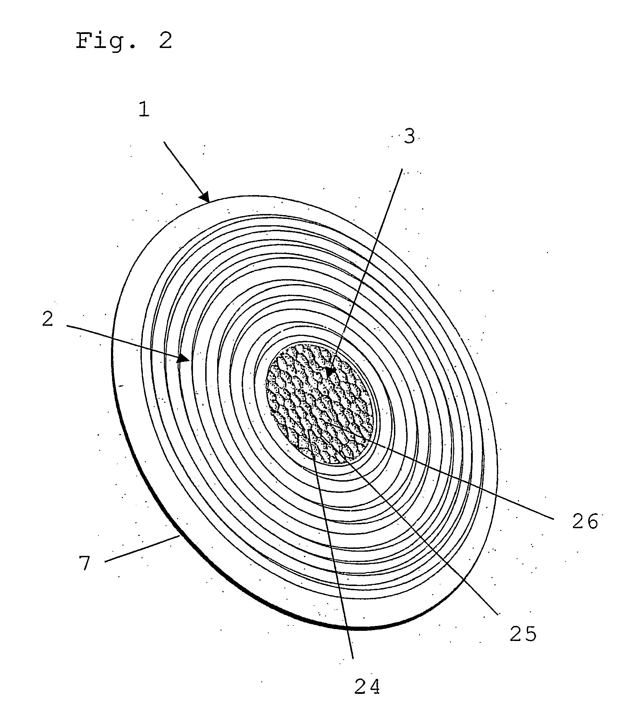

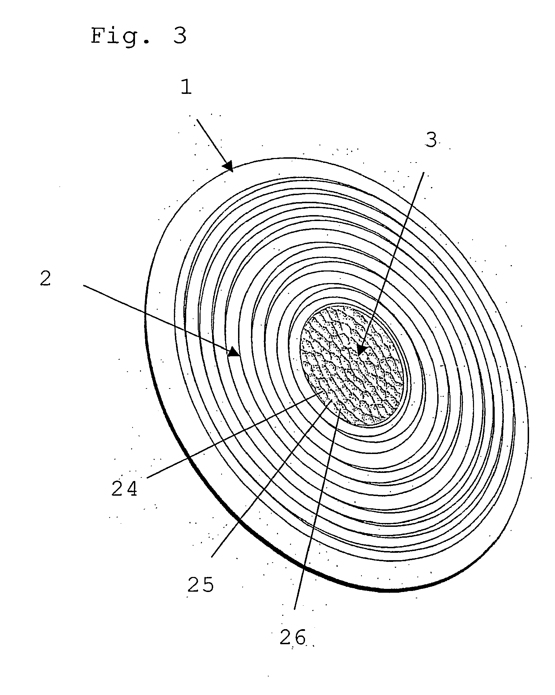

Die in Fig. 1 sowie die in den Figuren 2 und 3 dargestellte Streuscheibe 3 sind beispielhaft Streuscheiben, wie diese in der deutschen Patentanmeldung DE 103 43 630.8 der selben Anmelderin vom 19. September 2003 mit dem Titel "Streuscheibe" beschrieben wird, deren Inhalt durch Bezugnahme voll umfänglich auch zum Inhalt der vorliegenden Anmeldung gemacht wird.

Bei dieser besonders bevorzugten Ausführungsform wird in einem einzigen Heissformungebungsschritt, im Wesentlichen bei einer aus Kunststoff bestehenden Ausführungsform, aus einem im Wesentlichen planen Grundkörper 7 die optischen Anordnung 1 erzeugt.

Nachfolgend werden zunächst nur die Gemeinsamkeiten der in den Fig. 1, 2 und 3 dargestellten optischen Anordnungen 1 beschrieben und werden danach im Detail deren jeweiligen Unterschiede erläutert.

Die kreisförmige Streuscheibe 3 ist auf der Lichtaustrittsseite des Grundkörpers 7 angeordnet und erstreckt sich vollflächig innerhalb des ersten ringförmigen Abschnitts 8, welcher sich klar abgegrenzt, vorzugsweise nahtlos an diese anschliesst.

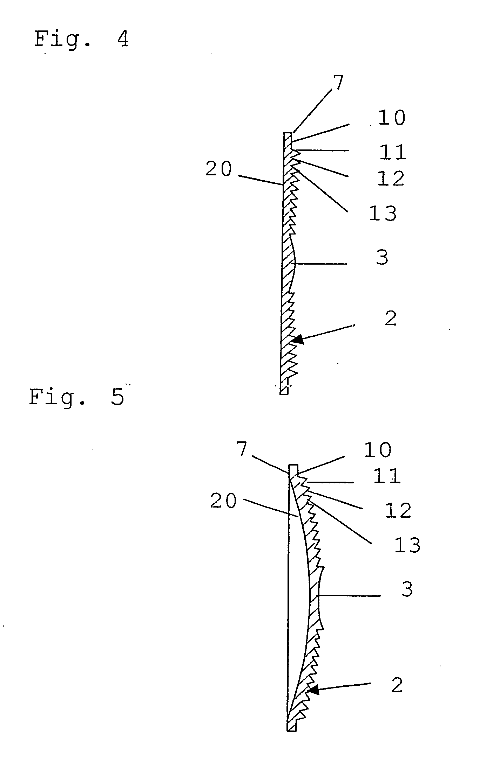

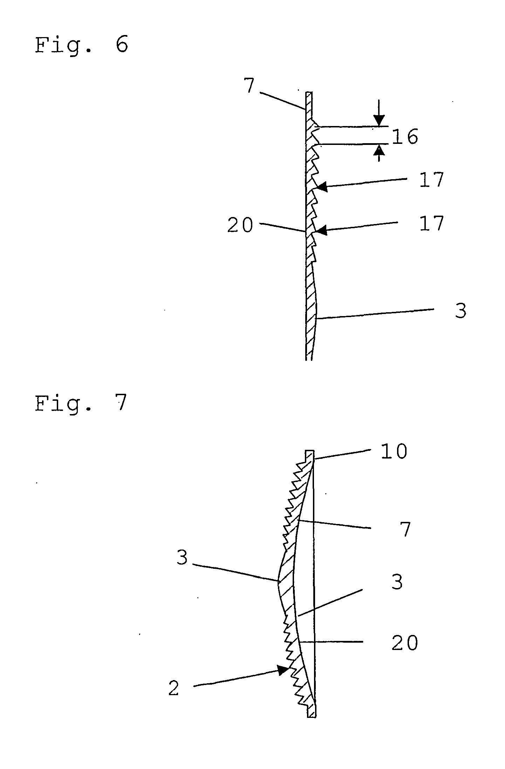

Der Grundkörper 7 ist bei einer Linse mit reellem, rechtsseitigen, somit positivem Brennpunkt vorzugsweise im Bereich der Streuscheibe 3 sowie im Bereich der ringförmigen Oberflächen 4, 5, 6 und 8 konvex oder nach aussen gewölbt geformt, wie dies beispielsweise schematisch in den Querschnittsdarstellungen in Fig. 4 und Fig. 6 gezeigt ist.

Der Grundkörper 7 ist bei einer Linse mit virtuellem oder negativem, linksseitigen Brennpunkt vorzugsweise im Bereich der Streuscheibe 3 sowie im Bereich der ringförmigen Oberflächen 4, 5, 6 und 8 konkav oder nach innen gewölbt geformt, wie dies beispielsweise schematisch in einer Querschnittsdarstellung in Fig. 5 gezeigt ist.

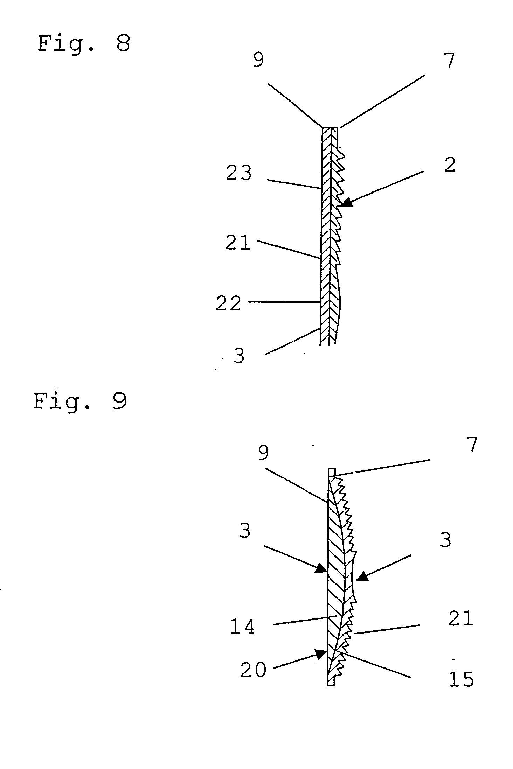

Der Grundkörper 7 kann jedoch, insbesondere bei Verwendung einer Hybridlinse, welche im Querschnitt in den Fig. 8 und 9 gezeigt ist, auch zwei- oder mehrstückig ausgebildet sein und umfasst dann sowohl den die Stufenlinse 2 aufweisenden Grundkörperabschnitt 7 auch einen weiteren Grundkörperabschnitt 9, welcher wie in Fig. 8 dargestellt eben beziehungsweise plan oder wie in Fig. 9 dargestellt beispielsweise plankonvex ausgebildet sein kann.

Vorzugsweise ist der Grundkörperabschnitt 9 bei Hybridlinsen aus Glas eines ersten Materials gefertigt und ist der Grundkörperabschnitt 7 aus Glas eines zweiten Materials mit einer anderen Dispersion als derjenigen des Grundkörperabschnitts 9 oder ist aus einem heissformbaren Kunststoff hergestellt.

Nachfolgend wird auf Fig. 4 bezug genommen, welche eine plankonvexe Stufenlinse mit zentraler Streuscheibe 3 zeigt sowie auf Fig. 6, welche ein Detail von Fig. 4 vergrösserter Darstellung wiedergibt.

Bei der in Fig. 4 sowie Fig. 5 dargestellten einstückigen Stufenlinse 2 kann die jeweilige optisch wirksame Oberfläche 11, 12, 13 teil einer asphärischen oder auch einer sphärischen Linse sein und kann die optische Anordnung 1 einen Randbereich 10 aufweisen, welcher zur Halterung in einer zugeorndeten mechanischen Aufnahme planparallel ausgebildet sein kann.

Als Teil einer asphärischen Linse werden die ringförmigen, optisch wirksamen Oberflächen dieser Stufen (beispielsweise 4, 5, 6, 11, 12, 13) so geformt, dass eine in etwa ebene Welle mit zur optischen Achse senkrechten Phasenfronten in einem reellem Brennpunkt vereinigt wird.

Hierbei soll sich die optische Achse durch die Mitte der optischen Anordnung im Wesentlichen senkrecht zu deren Hauptebenen erstrecken.

Im Falle der in Fig. 5 dargestellten bikonkaven Stufenlinse werden die jeweiligen ringförmigen, optisch wirksamen Oberflächen so geformt, dass aus einer von links eintretenden ebenen Welle die Phasenfronten einer Kugelwelle erzeugt werden, deren virtueller Brennpunkt oder deren scheinbarer Ursprung auf der optischen Achse links von der in Fig. 5 dargestellten Stufenlinse 2 zu liegen scheint.

Wobei diese geometrisch-optischen Bedingungen exakt nur für eine Wellenlänge in einem mittleren Wellenlängenbereich des verwendeten Lichtspektrums gelten.

Zur Vereinfachung der Herstellung kann an Stelle komplexer asphärischer ringförmiger Geometrien auch eine asphärische Linse durch sphärische Ringabschnitte angenähert werden.

Hierbei werden möglichst gut angenäherte sphärische Abschnitte, somit Kreisbogenoberflächenabschnitte verwendet, für die jeweiligen Oberflächen der Ringe um zu einer einfacheren Fertigung der nötigen Prägewerkzeuge zu gelangen.

Ein nochmalige Vereinfachung besteht darin, beispielsweise für Stufenlinsen mit einer sehr hohen Anzahl von Stufen und nur kleinen jeweiligen optischen Weglängenunterschieden zwischen Randpunkten benachbarter Stufen, kegelmantelförmige optische Oberflächen zu nutzen, welche dann nur noch in deren Neigung an die mittlere Neigung der Asphäre angepasst werden..

Dabei können die einzelnen ringförmigen Abschnitte und der zentrale kreisförmige Abschnitt der Stufenlinse je nach dem, ob lichtsammelnde oder lichtstreuende Eigenschaften erwünscht sind entweder konkav oder konvex gestaltet sein.

Zur Verdeutlichung der äusserst variablen Einsetzbarkeit der Konzepte ist in Fig. 5 eine bikonkave Stufenlinse, ist in Fig. 7 eine konvexkonkave Linse und sind in Fig. 8 und Fig. 9 Hybridlinsen gezeigt, von welchen die in Fig. 9 dargestellte Linse chromatisch korrigierte Eigenschaften aufweist.

Nachfolgend wird auf die in Fig. 9 dargestellte Hybridlinse bezug genommen, bei welcher eine plankonvexe Glaslinse 14 mit einem reellen Brennpunkt auf der rechten Seite der Linse 14 mit einer konkavkonvexen streuenden Stufenlinse 15 verbunden ist.

Die jeweiligen Brechkräfte oder Brennweiten sowie die Brechungsidizes der beiden Linsen 14 und 15 sind insgesamt so gewählt, dass sich noch eine sammelnde Wirkung ergibt. Dies bedeutet es ergibt sich insgesamt eine Sammellinse mit einem nach rechts verschobenen Brennpunkt.

Hierbei ist das Material der Stufenlinse 15 jedoch so gewählt, dass die Wirkung von dessen Dispersion in der gesamten Anordnung der Wirkung der Dispersion der plankonvex Linse 14 entgegen verläuft, so dass sich insgesamt geringer chromatische Aberrationen für dieses Linsensystem ergeben.

In alternativer Ausgestaltung kann die Stufenlinse 15 auch aus einem geprägtem Kunststoff bestehen, welcher auf die Linse 14 auflaminiert wird. Diese Kunststofflinse 15 kann mit einer Kratzschutzschicht 21 versehen sein.

Werden geprägte Glaslinsen verwendet, beträgt der optische Weglängenunterschied im Bereich der jeweiligen Stufe vorzugsweise mehr als 100 optische Wellenlängen.

Bei Verwendung von geprägten Kunststoff-Stufenlinsen wird vorzugsweise ein optischer Weglängenunterschied an der jeweiligen Stufe von weniger als etwa 1000 optischen Wellenlängen bevorzugt.

Ferner können die um den zentralen kreisförmigen Abschnitt der Stufenlinse angeordneten ringförmigen Abschnitte im Wesentlichen die gleiche radiale Erstreckung 16, dies bedeutet die gleiche Stufenbreite 16 aufweisen, siehe insbesondere Fig. 6. Hierbei kommt es folglich zu unterschiedlich hohen Stufen, da sich typischerweise die Neigungswinkel der jeweiligen ringförmigen, optisch aktiven Oberflächenabschnitte mit zunehmendem Abstand zur Mitte verändern.

Alternativ kann, um fertigungstechnisch hohe Präzision bei schwierig zu formenden Materialien zu erreichen, die Höhe 17 der optisch wirksamen Oberflächenabschnitte konstant gehalten werden, so dass sich hierdurch Ringe mit verschieden grosser Breite ergeben, siehe insbesondere Fig. 6.

Ferner kann die Stufenlinse 2 und/oder die Streuscheibe 3 als Filter ausgebildet werden, insbesondere als UV- IR- oder farbiges Bandfilter und/oder als Konversionsfilter ausgebildet sein.

Besonders vorteilhaft ist es, wenn hierzu eine Seite, wie Beispiel in Fig. 9 beispielhaft auf der linken Seite der Plankovexlinse 14 dargestellt eine Interferenzfilterschicht 20 aufgebracht ist.

Dieses Interferenzfilterschichtsystem kann alternativ auch zur Verschiebung der Farbtemperatur oder zur Kompensation von spektralen Linien verwendet werden.

Besonders vorteilhaft ist es ferner, wenn zumindest die jeweils einer Lichtquelle zugewandte Oberfläche der optischen Anordnung 1 aus Glas besteht und vorgespannt, vorzugsweise thermisch vorgespannt ist, da hierdurch eine deutlich erhöhte thermische Beständigkeit erreicht wird.

Es kann die Streuscheibe 3 generell sowohl auf der linken, somit der Lichteintrittsseite als auch auf der rechten, somit der Lichtaustrittsseite der optischen Anordnung 1 angeordnet sein.

Ferner ist es möglich, wie in Fig. 7 lediglich schematisch dargestellt, sowohl auf der Lichteintritts- als auch auf Lichtaustrittsseite jeweils eine Streuscheibe 3 anzuordnen, so dass sich deren streuende Wirkung definiert überlagert.

Ferner kann die Streuscheibe 3 statt einer scharfen radialen Berandung auch verschieden stark streuende Bereiche aufweisen, beispielsweise einen mittig stärker streuenden Bereich und einen, vorzugsweise stetig auslaufenden randseitig weniger stark streuenden Bereich aufweisen.

Hierzu kann die Streuscheibe beispielsweise eine definierte Körnung aufweisen, welche in einem mittleren Bereich 22 eine feinere Körnungsstruktur und mit zunehmender radialer Entfernung in einem randseitigen.Bereich 23 eine grobere Körnungsstruktur umfasst, siehe diesen Sachverhalt schematisch dargestellt auch Fig. 8.

Bei den nachfolgend beschriebenen Ausführungsformen von alternativ zu einfachen Körnungen oder mattierten Bereichen verwendbaren Streuscheiben 3 besteht der neue Ansatz unter anderem darin, von der regelmässigen Anordnung von Facetten einer regelmässigen Streuscheibe abzuweichen.

Dies geschieht bei einer ersten, in Fig. 1 dargestellten Ausführungsform dadurch, dass eine Streuscheibe 3 bereitgestellt wird, die einen transparenten Grundkörper 7, 9 aufweist, wobei die optisch wirksame Oberfläche der Streuscheibe 3 in Facetten 24, 25, 26, welche nur beispielhaft mit Bezugszeichen versehen sind, unterteilt ist, und wobei jeder Facette 24, 25, 26 eine Erhebung oder Vertiefung mit einer zweiten, gewölbt ausgebildeten Oberfläche zugeordnet ist und die Facetten 24, 25, 26 relativ zu einander verdreht angeordnet sind oder unterschiedliche geometrische Formen annehmen.

Unter einer Facette soll hierbei eine Fläche verstanden werden, die von der Randkontur der jeweiligen geometrischen Form aufgespannt wird. Je nach Ausbildung der ersten Oberfläche, d.h. der Oberfläche des Grundkörpers 7 der Streuscheibe 3, als ebene oder gewölbte Fläche kann die Facette 24, 25, 26, welche durch die geometrischen Formen aufgespannt wird, ebenfalls eben oder gewölbt sein.

Die der Facette 24, 25, 26 zugeordneten Erhebung oder Vertiefung stellt ein Element der Streuscheibe 3 dar. Die Erhebung oder Vertiefung besitzt die Facette 24, 25, 26 als Grundfläche und befindet sich zumindest im Wesentlichen oberhalb oder unterhalb dieser Grundfläche. Die Erhebung oder Vertiefung kann im Beleuchtungsfall als Linse wirken.

Durch diese Lösung kommt es zu einer Superposition einer Vielzahl unterschiedlich konturierter Lichtfelder und damit wunschgemäss zu einem runden Lichtfeld.

Abhängig von der jeweiligen Facettenkonfiguration und der Beschaffenheit der den Facetten zugeordneten Erhebungen oder Vertiefungen lässt sich ein Lichtfeld mit einem wählbaren Gradienten der Beleuchtungsstärke bereitstellen, bzw. ein solches das vorgebbar weich oder hart ausläuft.

Ein weich auslaufendes Lichtfeld ist ein solches mit einem geringen Gradienten der Beleuchtungsstärke zum Rand des Lichtfeldes hin. Umgekehrt führt ein starker Gradient der Beleuchtungsstärke am Rand des Lichtfeldes zu einem hart auslaufenden Lichtfeld. Ein weiterer erzielter Vorteil besteht darin, dass mit dieser Facettenkonfiguration randseitige Verfärbungen beim Einsatz von Entladungslampen vermieden werden können.

Um die Unterschiedlichkeit der einzelnen zur Superposition beitragenden Lichtfelder zu erhöhen und darüber die oben genannten Vorteile zu erzielen, können verschiedene Massnahmen ergriffen werden.

So kann vorgesehen sein, dass die Facetten eine polygonale Randkontur aufweisen. Hierbei ist die Eckenzahl der Polygone variabel.

Die Facetten mit polygonaler Randkontur sollten die Oberfläche vollständig bedecken, da ansonsten lokal keine Streuwirkung gegeben ist.

Weiterhin können auch Streuscheiben bereitgestellt werden, bei denen die Facetten 24, 25, 26 unterschiedliche Flächeninhalte aufweisen, wie dies beispielhaft in Fig. 2 dargestellt ist.

Als Polygone können Drei-, Vier-, Fünf-, Sechs- und/oder Sieben-Ecke gewählt werden. Die Verbindungsstrecken zwischen benachbarten Ecken der Polygone können gerade oder gebogene Linien sein.

Als weitere Folge der Unregelmässigkeit der Facetten ergibt sich, dass diese unterschiedliche Orientierungen aufweisen.

Eine weitere Massnahme, mit der man sich dem Ziel runder Lichtfelder, und hinsichtlich der Beleuchtungsstärke zum Rand hin weich oder hart auslaufender Lichtfelder nähert, ist die Wahl und ggf. Variation der jeweiligen Wölbung der Erhebungen oder Vertiefungen. Die Wölbung kann sphärisch sein, und die Erhebung bzw. Vertiefung entsprechend kalottenförmig ausgebildet sein. Alternativ kann die Wölbung asphärisch gewählt werden. Weiterhin besteht zur Gewährleistung des o.g. Ziels die Möglichkeit, die Tiefe der Ausnehmungen bzw. die Höhe der Erhebungen zu variieren.

Aus den vorstehenden Ausführungen ergibt sich, dass die aufgeführten Massnahmen alternativ oder kumulativ vorgesehen werden können. Zur praktischen Umsetzung der vorstehend genannten Lösung ist in einer ersten Lösungsvariante eine Streuscheibe vorgesehen, die einen transparenten Grundkörper mit einer ersten Oberfläche aufweist, wobei die erste Oberfläche in Facetten unterteilt ist, und bei der jeder Facette eine Erhebung oder Vertiefung mit einer zweiten, gewölbt ausgebildeten Oberfläche zugeordnet ist, und bei dem die Scheitelpunkte S der Erhebungen oder Vertiefungen entlang einer Spirale angeordnet sind.

Der Scheitelpunkt S der Erhebung oder Vertiefung sei definiert als Schnittpunkt der durch den Facettenschwerpunkt hindurchtretenden Oberflächennormale der Facette mit der gewölbten Oberfläche der Erhebung oder Vertiefung.

Sind bei zwei benachbarten Facetten die Erhebung der Radius und/oder die Tiefe der Erhebung oder Vertiefung unterschiedlich, so ist im allgemeinen der gemeinsame Rand gekrümmt, und es ergeben sich für die Vertiefungen Ränder die in einer Aufsicht unterschiedliche geometrische Formen-annehmen

Durch die Anordnung der Scheitelpunkte S entlang einer Spirale entsteht eine Vielzahl von unregelmässig angeordneten Facetten, mit welchen wunschgemäss ein rundes Lichtfeld geschaffen wird, welches bei Entladungslampen im Randbereich keine Verfärbungen aufweist, und dessen Gradient der Beleuchtungsstärke vorgegeben werden kann.

Die Höhe der Erhebungen bzw. Vertiefungen kann über die Streuscheibe 3 hinweg variiert werden, so dass die Erhebungen und Vertiefungen unterschiedlich hoch bzw. tief ausfallen. Auch dies trägt zum Ziel bei, ein rundes und mehr oder weniger weich oder hart auslaufendes Lichtfeld bereitzustellen.

In einer in Fig. 3 dargestellten Ausgestaltung der Streuscheibe 3 befinden sich die Scheitelpunkte S der Facetten 24, 25, 26 im Wesentlichen auf einer Archimedischen Spirale.

Die einzelnen Punkte erhält man durch fortgesetztes Abtragen einer konstanten Bogenlänge L längs der Spirale von innen nach aussen. Die Scheitelpunkte können äquidistant zueinander angeordnet sein. Neben der äquidistanten Anordnung der Scheitelpunkte ist auch eine variable Bogenlänge L möglich. So kann eine von innen nach aussen zunehmende Bogenlänge L gewählt werden. Auf diese Weise erhält man im Inneren der Streuscheibe kleine Facetten mit Erhebungen geringer Höhe bzw. mit Vertiefungen geringer Tiefe, und somit eine kleine Streuwirkung. Zum Rand hin werden die Facetten grösser, die Höhe der Erhebungen bzw. die Tiefe der Vertiefungen wird grösser und die Streuwirkung wird ebenfalls grösser. Das Lichtfeld weist dann einen eher kleinen Halbstreuwinkel mit recht grosser Beleuchtungsstärke im Zentrum auf. Im Gegensatz hierzu wäre bei konstantem L die Beleuchtungsstärke eher plateauförmig und weich auslaufend.

Die vorstehend genannten Massnahmen, welche alternativ und ggf. kumulativ ergriffen werden können, erlauben es, auf vielfältige Weise, die Streuscheibe 3 an das jeweilige Beleuchtungssystem, zum Beispiel den jeweiligen Reflektor, anzupassen.

So kann durch die Wahl des Spiralentyps, des Werts der Bogenlänge L, aber auch durch Variation oder Konstanz der Bogenlänge eine Anpassung an einen Reflektor erfolgen. Diese Massnahmen ermöglichen es, das Lichtfeld in vorgegebenen Bereichen des Beleuchtungssystems zu beeinflussen, es lokal zu verstärken oder zu schwächen, und erlauben somit auf vielfältige Weise, das Lichtfeld zu optimieren.

Aus den vorstehenden Ausführungen ergibt sich, dass dem Fachmann mit den Lösungsvarianten eine Fülle von Parametern an die Hand gegeben wird, wie er das Lichtfeld unter Berücksichtigung des Beleuchtungssystems gestalten und anpassen kann. Insofern erlaubt der gewählte Ansatz der unterschiedlichen geometrischen Formen für die Facetten eine sehr vielfältige und variable Anpassung des Lichtfeldes an die jeweiligen Verhältnisse.

Beispielhaft zeigen die Figuren 1 und 2 weitere bevorzugte Ausführungsformen. In Fig. 1 ist eine erste Ausführungsform der optischen Anordnung einer Stufenlinse mit einer in etwa mittig angeordneten, im Wesentlichen kreisförmigen Streuscheibe, welche einzelne, zueinander leicht verdrehte Facetten aufweist, dargestellt und Fig. 2 zeigt eine zweite Ausführungsform der optischen Anordnung einer Stufenlinse mit einer in etwa mittig angeordneten, im Wesentlichen kreisförmigen Streuscheibe, welche Facetten aufweist, die durch ein Monte-Carlo-Verfahren aus deren regelmässiger Lage versetzt wurden.

Es tritt hinzu, dass zur Realisierung eines wunschgemässen Lichtfeldes oder eines wunschgemässen vordefinierten Streuverhaltens auch mehrere Möglichkeiten offen stehen, die sich im Design unterscheiden. Insofern erlauben es die Lösungsvarianten auch, hinsichtlich des ästhetischen Erscheinungsbildes optimierte Streuscheiben bereitzustellen. Es kann für die Facette beispielsweise ein Rautenmuster oder die Form eines Hahnentritts verwendet werden.

Ferner ist es auch möglich, nicht-koaxiale oder nichtkonzentrische Anordnungen der Streuscheibe zu verwenden.

Nachfolgend werden beispielhaft bevorzugte beleuchtungstechnischen Ausführungsformen diskutiert, bei welchen sich das Lichtmischsystem besonders vorteilhaft verwenden lässt.

### Detaillierte Beschreibung bevorzugter Ausführungsformen von beleuchtungstechnischen Einrichtungen

### Stufenlinsenscheinwerfer umfassend eine Stufenlinse mit positiver Brechkraft

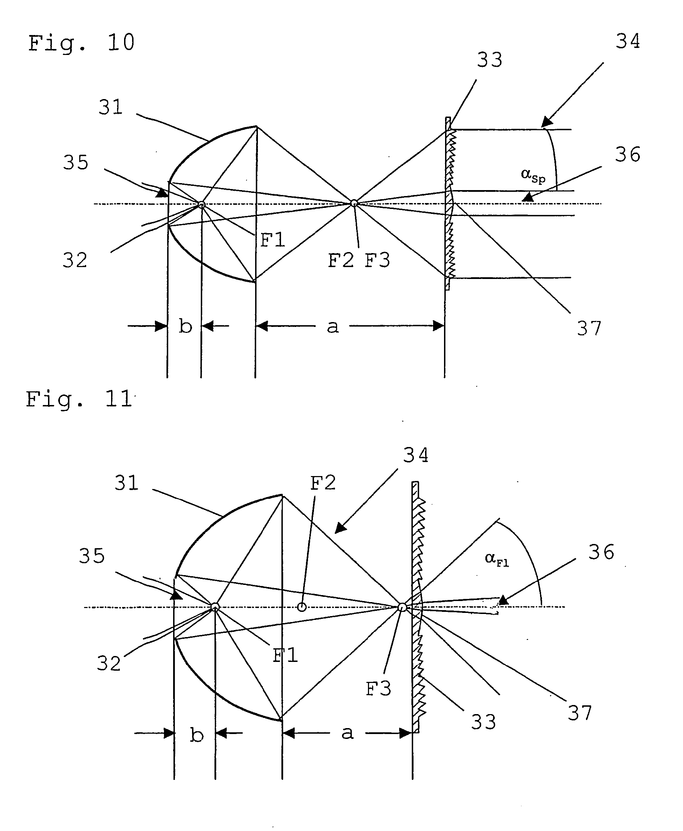

Nachfolgend wir auf Fig. 10 bezug genommen, welche eine Ausführungsform des Stufenlinsenscheinwerfers in Spotstellung zeigt.

Der Stufenlinsenscheinwerfer enthält im Wesentlichen einen ellipsoiden Reflektor 31 , eine Lampe 32, welche eine Glühlampe, insbesondere Halogenlampe, ein Leuchtdiode, ein Leuchtdiodenfeld oder eine Gasentladunsglampe sein kann, und eine Stufenlinse 33, welche eine sammelnde Linse, vorzugsweise eine plankonvexe Stufenlinse ist.

In Fig. 10 ist der reflektorferne Brennpunkt F2 des ellipsoiden Reflektors 31 in etwa mit dem linksseitigen reellen oder positiven Brennpunkt F3 der Stufenlinse 33 überlagert.

Das aus dem Scheinwerfer austretende Lichtbündel 34 ist in den Figuren lediglich schematisch durch dessen äussere Randstrahlen angedeutet.

Die Abstände a zwischen Stufenlinse 33 und Vorderkante des Reflektors 31 und b zwischen Lampe 32 und Scheitelpunkt des Reflektors 31 sind ebenfalls in Fig. 10 dargestellt.

Die Spotstellung wird dadurch eingestellt, dass sich die Lampenwendel oder der Entladungsbogen der Lampe 2 im Wesentlichen im reflektorseitigen Brennpunkt F1 des Reflektorellipsoids 1 angeordnet wird.

Das von dem Reflektor 31 reflektierte Licht wird in dieser Stellung nahezu vollständig auf den reflektorfernen Brennpunkt F2 des Ellipsoids 31 gerichtet. Der linksseitige positive oder reelle Brennpunkt F3 der Stufenlinse 33 fällt dann in etwa mit dem Brennpunkt F2 des Reflektorellipsoids 31 zusammen.

Es ist in Fig. 31 im Nahfeld auch zu erkennen, wie sich die Öffnung 35 innerhalb des Reflektors 32 im parallelen Strahlengang des Lichtfelds 34 als dunkler Bereich 36 auswirkt.

Innerhalb der Stufenlinse 33 ist eine kreisförmige, mittig angeordnete Streuscheibe 37 vorgesehen, welche ein definiertes Streulichtverhältnis und einen definierten Öffnungswinkel des gestreuten Lichts erzeugt. Hierdurch wird ein definiertes Mischverhältnis des gestreuten Lichts relativ zu dem durch die Stufenlinse 33 geometrisch-optisch abgebildeten Licht bereitgestellt.

Alternativ zu dieser Ausführungsform der Streuscheibe 37 ändert sich bei einer weiteren Ausführungsform die streuende Wirkung entlang des Radius der Streuscheibe 37 auf stetige Weise, so dass in der Mitte der Streuscheibe 37 stärker streuende Bereiche und an deren abrupt endendem Rand weniger stark streuende Bereiche angeordnet sind.

In nochmals weiterer alternativer Ausgestaltung ist der Rand der Streuscheibe 37 nicht nur abrupt endend sondern es ist dieser in dessen streuender Wirkung stetig abnehmend ausgebildet und kann sich dieser auch unter die oder über der Stufenlinse erstrecken.

Hierdurch werden systemabhängig weitere Anpassungen an die stellungsabhängigen Mischverhältnisse vorgenommen, so dass der Fachmann stets ein optimales Mischungsverhältnis für ein homogen ausgeleuchtetes Lichtfeld oder auch für Lichtfelder mit definiert erzeugten lokal höheren Intensitäten bereitstellen kann.

Es ist aus Fig. 10 ferner zu erkennen, dass in der Spotstellung nur ein geringer Teil des gesamten Lichts, durch die Streuscheibe 37 tritt.

Durch die Streuscheibe 37 kommt es zu einer sehr homogenen Ausleuchtung, wie dies in Fig. 12, welche eine öffnungswinkelabhängige logarithmische Darstellung der Lichtstärke des Stufenlinsenscheinwerfers zeigt, für die Spotstellung mit der Linie 38 wiedergegeben ist.

Fig. 11 zeigt die in Fig. 10 dargestellte Ausführungsform des Stufenlinsenscheinwerfers in einer ersten Floodstellung, bei welcher der reflektorferne Brennpunkt F2 des Reflektors 31 in etwa in einer reflektornahen Oberfläche der Stufenlinse 33 angeordnet ist.

Hierbei wird der Wert der Verschiebung a gegenüber der Spotstellung durch eine mechanische Führung definiert verändert.

Der Aufbau entspricht grundsätzlich dem in Fig. 10 erläuterten Aufbau des Stufenlinsenscheinwerfers.

Jedoch ist aus Fig. 11 deutlich zu erkennen, dass sowohl der Öffnungswinkel des austretenden Lichtstrahlenbündels 34 als auch der des dunklen Bereichs 36 zugenommen hat.

Da in dieser Stellung jedoch ein sehr hohe Anteil des Lichts nur auf einem sehr kleinen Bereich in der Mitte der Streuscheibe 37 auftrifft, kann gerade dieser Bereich so gestaltet werden, dass dessen Vorwärtsstreukeule in etwa den dunklen Bereich 36 im Fernfeld oder Fernbereich in gewünschter Weise kompensiert. Es sei auch auf Fig. 36 verwiesen, welche die Lichtverhältnisse mit der Linie 39 beispielhaft für eine Floodstellung wiedergibt.

Eine wesentlich kompaktere Bauform des Stufenlinsenscheinwerfers mit noch höherer nutzbarer Lichtausbeute ist mit der nachfolgend beschriebenen Ausführungsform eines Stufenlinsenscheinwerfers erreichbar.

### Stufenlinsenscheinwerfer umfassend eine Stufenlinse mit negativer Brechkraft

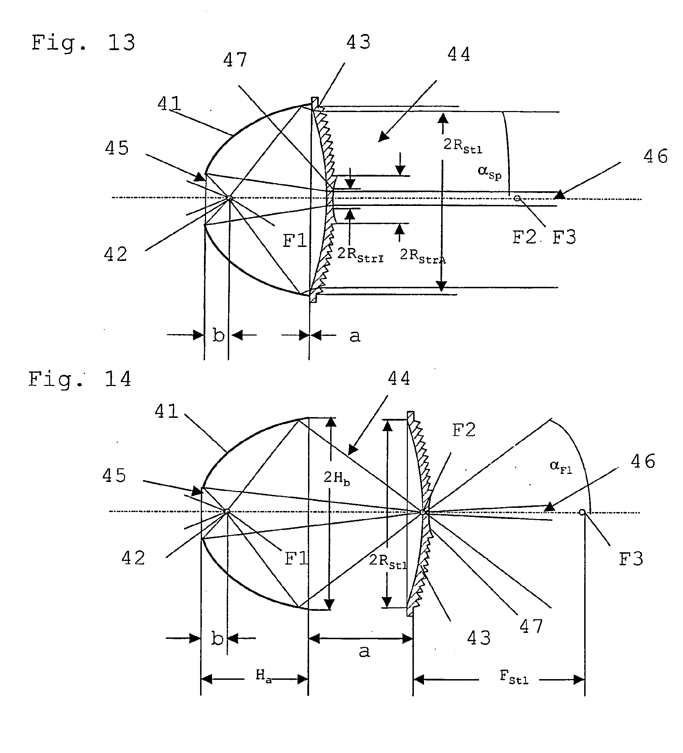

Nachfolgend wird auf Fig. 13 bezug genommen, welche eine Ausführungsform des Stufenlinsenscheinwerfers in Spotstellung zeigt. Der Stufenlinsenscheinwerfer enthält im Wesentlichen einen ellipsoiden Reflektor 41 , eine Lampe 42, welche eine Halogenlampe oder auch eine Entladungslampe sein kann, und eine Stufenlinse 43, welche eine Linse mit negativer Brechkraft, vorzugsweise eine bikonkave Stufenlinse ist.

In Fig. 13 ist der reflektorferne Brennpunkt F2 des ellipsoiden Reflektors 41 in etwa mit dem rechtsseitigen virtuellen oder negativen Brennpunkt F3 der Stufenlinse 43 überlagert.

Das aus dem Scheinwerfer austretende Lichtbündel 44 ist in den Figuren lediglich schematisch durch dessen äussere Randstrahlen angedeutet.

Die Abstände a zwischen Stufenlinse 43 und Vorderkante des Reflektors 41 und b zwischen Lampe 42 und Scheitelpunkt des Reflektors 41 sind ebenfalls in Fig. 13 dargestellt.

Die Spotstellung wird dadurch eingestellt, dass sich die Lampenwendel oder der Entladungsbogen der Lampe 42 im Wesentlichen im reflektorseitigen. Brennpunkt F1 des Reflektorellipsoids 41 angeordnet wird.

Das von dem Reflektor 41 reflektierte Licht wird in dieser Stellung nahezu vollständig auf den reflektorfernen Brennpunkt F2 des Ellipsoids 41 gerichtet. Der rechtsseitige negative oder virtuelle Brennpunkt F3 der Stufenlinse 43 fällt dann in etwa mit dem Brennpunkt F2 des Reflektorellipsoids 41 zusammen.

Es ist in Fig. 13 im Nahfeld auch zu erkennen, wie sich die Öffnung 45 innerhalb des Reflektors 41 im parallelen Strahlengang des Lichtfelds 44 als dunkler Bereich 46 auswirkt.

Innerhalb der Stufenlinse 43 ist eine kreisförmige, mittig angeordnete Streuscheibe 47 vorgesehen, welche ein definiertes Streulichtverhältnis und einen definierten Öffnungswinkel des gestreuten Lichts erzeugt. Hierdurch wird ein definiertes Mischverhältnis des gestreuten Lichts relativ zu dem durch die Stufenlinse 43 geometrisch-optisch abgebildeten Licht bereitgestellt.

Alternativ zu dieser Ausführungsform der Streuscheibe 47 ändert sich bei einer weiteren Ausführungsform die streuende Wirkung entlang des Radius der Streuscheibe 47 auf stetige Weise, so dass in der Mitte der Streuscheibe 47 stärker streuende Bereiche und an deren abrupt endendem Rand weniger stark streuende Bereiche angeordnet sind.

In nochmals weiterer alternativer Ausgestaltung ist der Rand der Streuscheibe 47 nicht nur abrupt endend sondern es ist dieser in dessen streuender Wirkung stetig abnehmend ausgebildet und kann sich dieser auch unter die oder über der Stufenlinse erstrecken.

Hierdurch werden systemabhängig weitere Anpassungen an die stellungsabhängigen Mischverhältnisse vorgenommen, so dass der Fachmann stets ein optimales Mischungsverhältnis für ein homogen ausgeleuchtetes Lichtfeld oder auch für Lichtfelder mit definiert erzeugten lokal höheren Intensitäten bereitstellen kann.

Es ist aus Fig. 13 ferner zu erkennen, dass in der Spotstellung nur ein geringer Teil des gesamten Lichts, durch die Streuscheibe 47 tritt.

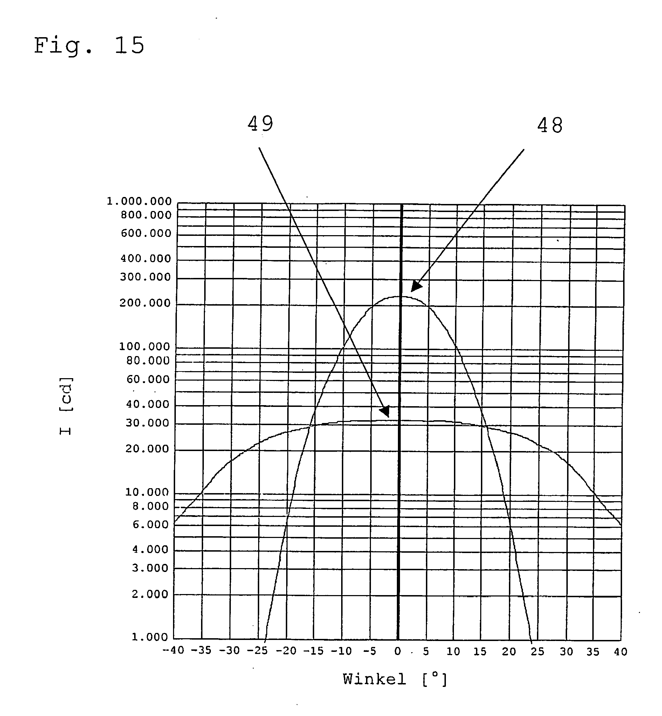

Durch die-Streuscheibe 47 kommt es auch bei dieser Ausführungsform zu einer sehr homogenen Ausleuchtung, wie dies in Fig. 15, welche eine öffnungswinkelabhängige logarithmische Darstellung der Lichtstärke des Stufenlinsenscheinwerfers zeigt, für die Spotstellung mit der Linie 48 wiedergegeben ist.

Fig. 14 zeigt die in Fig. 13 dargestellte Ausführungsform des Stufenlinsenscheinwerfers in einer ersten Floodstellung, bei welcher der reflektorferne Brennpunkt F2 des Reflektors 41 in etwa in einer reflektornahen Oberfläche der Stufenlinse 43 angeordnet ist.

Hierbei wird der Wert der Verschiebung a gegenüber der Spotstellung durch eine mechanische Führung definiert verändert.

Der Aufbau entspricht grundsätzlich dem in Fig. 13 erläuterten Aufbau des Stufenlinsenscheinwerfers.

Jedoch ist aus Fig. 14 deutlich zu erkennen, dass sowohl der Öffnungswinkel des austretenden Lichtstrahlenbündels 44 als auch der des dunklen Bereichs 46 zugenommen hat.

Da in dieser Stellung jedoch ein sehr hoher Anteil des Lichts nur auf einem sehr kleinen Bereich in der Mitte der Streuscheibe 47 auftrifft, kann gerade dieser Bereich so gestaltet werden, dass dessen Vorwärtsstreukeule in etwa den dunklen Bereich 46 im Fernfeld oder Fernbereich in gewünschter Weise kompensiert. Es sei auch auf Fig. 15 verwiesen,' welche die Lichtverhältnisse mit der Linie 49 beispielhaft für eine Floodstellung wiedergibt.

Bei den vorstehend beschriebenen Ausführungsform nehmen der erste und der zweite Bereich, welche jeweils der Stufenlinse und der Streuscheibe zugeordnet sind, reale Oberflächen der optischen Anordnung ein, in Form von konzentrisch angeordneten Oberflächen mit verschiedenen Durchmessern (2RSt1, 2RstrA). Dabei liegt die Streuscheibe innerhalb eines Kreises mit dem Radius RstrA und ist weiterer Ausgestaltung nochmals unterteilt

Die Streuscheibe mit dem Radius RstrA enthält einen konzentrischen kleineren Kreis mit dem Durchmesser RstrI, welcher bei dieser alternativen Ausgestalgung ein anderes Streuverhalten aufweist.

Das Verhältnis der Oberflächengrösse von Stufenlinsenoberfläche zu Streuscheibenoberfläche definiert das Verhältnis der jeweils wirksam werdenden Anteile des austretenden, für beleuchtungstechnische Zwecke nutzbaren Lichts und ist je nach einer besonderen Ausführungsform grösser als 2 zu 1 (Stufenlinsenoberfläche zu Streuscheibenoberfläche), vorzugsweise ist das Verhältnis der Oberflächengrösse von Stufenlinsenoberfläche zu Streuscheibenoberfläche grösser als 10 zu 1 und am bevorzugtesten ist das Verhältnis der Oberflächengrösse von Stufenlinseoberfläche zu Streuscheibenoberfläche grösser als 100 zu 1.

In weiterer Ausgestaltung ist der Öffnungswinkel des aus der Streuscheibe austretenden Lichts in vertikaler Richtung verschieden von dem Öffnungswinkel in horizontaler Richtung und es wird hiermit durch die Streuscheibe je nach Ausführungsform ein unrund, ellipsoid, vieleckig und insbesondere rechteckig und/oder quadratisch ausgeleuchtetes Lichtfeld erzeugt.

Die Unterteilung der Streuscheibe in Bereiche mit verschiedenem Streuverhalten, insbesondere verschiedem starkem Streuverhalten auch zu, dass die Art des Lichteinfalls steuerbar wird. Es kann das runde Lichtfeld der Spotstellung bei Verstellung beispielsweise zunächst in ein quadratisches Lichtfeld mit weichem Randabfall übergehen, wenn der Lichtkegel zwar noch den gesamten Streuscheibendurchmesser R_{StrA} aber nicht mehr die Stufenlinse erfasst und bei weiterer Verstellung und kleiner werdendem Lichtkegel kann das Lichtfeld in ein Lichtfeld mit hartem Randabfall übergehen, wenn der Lichtkegel nur noch einen inneren Durchmesser R_{strI} erfasst, dessen Anteile das Licht nur noch in das quadratische Lichtfeld aber sehr viel exakter nur noch in dieses lenken.

Der elliptische Reflektor mit dem Grundkörper einer Ellipse lässt sich mathematisch exakt durch deren Hauptachsen Ha, Hb, definieren, siehe Fig. 14, wobei für den Reflektor 31, 41 angenommen wird, dass dieser zylindersymmetrisch und rotationsinvariant ausgebildet ist, dies bedeutet durch Angabe der zwei voneinander verschiedenen Hauptachsen Ha und Hb vollständig definiert ist.

Als Elliptizität des Reflektors 31, 41, wird, siehe beispielsweise Fig. 14, das Verhältnis seiner Hauptachsen ε = Ha/Hb der seine Form definierenden Ellipse bezeichnet, und es wird hierbei von einem zur optischen Achse des Stufenlinsenscheinwerfers zylindersymmetrischen Anordnung des Reflektors ausgegangen.

Ferner soll der in Fig. 14 dargestellte Reflektor in etwa einer halben, mittig geteilten Ellipse enstprechen oder von dieser, lediglich für die Erläuterung und zum besseren Verständnis der nachfolgenden Ungleichung, nicht zu stark abweichen.

Für eine beleuchtungstechnisch vorteilhafte Ausgestaltung mit hoher Lichtausbeute sollte der Wert von ε grösser als eins sein.

Bevorzugt ist für den Stufenlinsenscheinwerfer der vorstehend beschriebenen Ausführungsformen mit elliptischem Reflektor 31, 41 mit einer Elliptizität ε das Verhältnis von Brennweite zu Radius nₛₜₗ = Rₛₜₗ/Fₛₜₗ der Stufenlinse grösser als 0,5 mal 1/ sqrt(ε²-1), vorzugsweise grösser als 0,7 mal 1/ sqrt(ε²-1), am bevorzugtesten grösser als 0, 9 mal 1/ sqrt (ε²-1) , wobei 1/ sqrt (ε²-1) , den Kehrwert der Wurzel von (ε² - 1) darstellt.

Durch die Verwendung der Stufenlinse mit Streuscheibe kann ein erheblich höherer Teil des von der Lampe 32, 42 ausgesandten Lichtstroms für beleuchtungstechnische Zwecke genutzt werden, beispielsweise bis zu mehr als 50 % mehr des von der Lampe 32, 42 ausgesandten Lichtes in das zu beleuchtende Feld gerichtet werden. In der Spot-Stellung kann im wesentlichen das gesamte vom Reflektor 31, 41 kommende Licht in das enge Lichtfeld der Spot-Beleuchtung gerichtet werden und bildet hierbei der Anteil des auf die Streuscheibe 37, 47 fallenden Lichtes einen weich auslaufenden Rand, welcher für viele beleuchtungstechnische Zwecke hocherwünscht ist.

Bei der Ausführungsform des Stufenlinsenscheinwerfers mit Stufenlinse mit negative Brechkraft kann, insbesondere in dessen Spotstellung, auch nahezu der gesamte direkt von der Lampe 42 nach vorn, direkt in die Stufenlinse und die Streuscheibe eintretende Teil des Lichts genutzt werden, da dieser zu grossen Teilen ebenfalls zum weich auslaufenden Randbereich des beleuchtenden Lichts beiträgt.

In der Spotstellung des Stufenlinsenscheinwerfers sind erstmalig bis zu mehr als 80 % und in der Floodstellung sind bis zu mehr als 60 % des aus der Lampe 42 austretenden Lichts nutzbar.

Durch Wahl des Flächenverhältnis zwischen beleuchteter Fläche der Stufenlinse-und-beleuchteter Fläche der-Streuscheibe kann dieses Verhältnis zwischen Lichtanteil im Spotbereich und im Randbereich, beispielsweise durch Wahl des Durchmessers der Streuscheibe und des Durchmessers der Stufenlinse, wunschgemäss eingestellt werden. Hierdurch lassen sich Stufenlinsenscheinwerfer mit in Spotstellung zum Rand hin stärker oder weicher abfallendem Lichtfeld bereitstellen.

Besonders vorteilhaft findet der vorstehend beschriebene Stufenlinsenscheinwerfer seinen Einsatz in einem Beleuchtungsset zusammen mit einem gegenüber dem Stand der Technik wesentlich verkleinertem elektrischen Netzteil oder Vorschaltgerät. Dieses Netzteil kann bei gegenüber dem Stand der Technik gleicher nutzbarer Lichtleistung sowohl elektrisch als auch mechanisch kleiner gestaltet sein da der erfindungsgemässe Stufenlinsenscheinwerfer über eine wesentlich höhere Lichtausbeute verfügt. Somit wird weniger Gewicht benötigt und bei Transport und Lagerung geringerer Stauraum beansprucht.

Hierdurch wird aber auch, insbesondere bei Verwendung von Kaltlicht-Reflektoren die gesamte thermische Belastung der beleuchteten Personen und Gegenstände reduziert.

Ferner kann der erfindungsgemäße Stufenlinsenscheinwerfer zur Erhöhung der Lichtausbeute und der Homogenität des ausgeleuchteten Lichtfelds vorteilhaft auch in Taschenlampen verwendet werden.

### Bezugszeichenliste

- 1: optische Anordnung
- 2: Stufenlinse
- 3: Streuscheibe
- 4: ringförmige, konzentrische im Wesentlichen optisch wirksame Oberflächenabschnitte
- 5: dto.
- 6: dto.
- 7: Grundkörper(abschnitt)
- 8: wie 4 bis 6
- 9: Grundkörperabschnitt der mehrteiligen Anordnung
- 10: planparalleler Randbereich
- 11: optisch wirksame Oberfläche
- 12: dto.
- 13: dto.
- 14: Plankonvexlinse aus Vollmaterial
- 15: konvex-konkave Stufenlinse
- 16: radiale Erstreckung der optisch wirksamen Oberflächenabschitte, Breite
- 17: Höhe der optisch wirksamen Oberflächenabschnitte
- 18: Antireflexschicht
- 19: Kratzschutzschicht
- 20: Interferenzfilterschicht
- 21: Kratzschutzschicht
- 22: mittiger, stärker streuender Bereich
- 23: randseitiger, weniger stark streuender Bereich
- 24: Facette
- 25: dto.
- 26: dto.
- 31: Reflektor
- 32: Lampe
- 33: Stufenlinse
- 34: austretendes Lichtbündel
- 35: Öffnung im Reflektor 1
- 36: dunkler Bereich
- 37: Streuscheibe
- 38: Intensitätsverteilung in Spotstellung
- 39: Intensitätsverteilung in Floodstellung
- 41: Reflektor
- 42: Lampe
- 43: Stufenlinse
- 44: austretendes Lichtbündel
- 45: Öffnung im Reflektor 1
- 46: dunkler Bereich
- 47: Streuscheibe
- 48: Intensitätsverteilung in Spotstellung
- 49: Intensitätsverteilung in Floodstellung

## Patentansprüche

1. Stufenlinsenscheinwerfer mit einstellbarem Öffnungswinkel des austretenden Lichtbündels mit einem ellipsoiden Reflektor (31, 41), einer Lampe (32) und mindestens einer optischen Anordnung mit Stufenlinse (33, 43),
wobei entweder die Stufenlinse (33) einen reellen Brennpunkt aufweist, welcher mit einem reflektorfernen Brennpunkt des Reflektors (31, 41) für eine Spotstellung des Stufenlinsenscheinwerfers, überlagerbar ist oder
wobei die Stufenlinse (33, 43) eine Linse mit negativer Brennweite und virtuellem Brennpunkt ist, welcher mit einem reflektorfernen Brennpunkt des Reflektors für eine Spotstellung des Stufenlinsenscheinwerfers, überlagerbar ist,
**dadurch gekennzeichnet, dass** die optische Anordnung mit Stufenlinse (33, 43) eine Streuscheibe (37, 47) aufweist, wobei die Streuscheibe (37, 47) in einem ersten mittleren Bereich und die Stufenlinse (33, 43) in einem zweiten Bereich angeordnet sind und der erste und der zweite Bereich jeweils konzentrisch angeordnete Oberflächen mit verschiedenen Durchmessern (2Rstl, 2RstrA) einnehmen, wobei in einer Flood-Stellung ein sehr hoher Anteil des Lichts nur auf einem sehr kleinen Bereich in der Mitte der Streuscheibe (37, 47) auftrifft, und in der Spotstellung nur ein geringer Teil des gesamten Lichts durch die Streuscheibe tritt.

2. Stufenlinsenscheinwerfer nach Anspruch 1, **dadurch gekennzeichnet, dass** die Stufenlinse (33, 43) mit der Streuscheibe (37, 47) ein Lichtmischsystem definiert, welches den Anteil des gestreuten Lichts relativ zum dem Anteil des geometrisch-optisch abgebildeten Lichts, somit das Lichtmischverhältnis, in Abhängigkeit von der Stellung des Stufenlinsenscheinwerfers verändert.

3. Stufenlinsenscheinwerfer nach einem der vorstehenden Ansprüche, **dadurch gekennzeichnet, dass** der Öffnungswinkel des aus dem Stufenlinsenscheinwerfers in Stellung Spot kleiner oder gleich 8° und in Stellung Flood grösser oder gleich 60° ist.

4. Stufenlinsenscheinwerfer nach einem der vorstehenden Ansprüche, **dadurch gekennzeichnet, dass** der Öffnungswinkel des aus dem Stufenlinsenscheinwerfers in Stellung Spot kleiner oder gleich 8° und in Stellung Flood grösser oder gleich 70° ist.

5. Stufenlinsenscheinwerfer nach einem der vorstehenden Ansprüche, **dadurch gekennzeichnet, dass** der Öffnungswinkel des aus dem Stufenlinsenscheinwerfers in Stellung Spot kleiner oder gleich 8° und in Stellung Flood grösser oder gleich 80° ist.

6. Stufenlinsenscheinwerfer nach einem der vorstehenden Ansprüche, **dadurch gekennzeichnet, dass** der Stufenlinsenscheinwerfer einen elliptischem Reflektor (31, 41) mit einer Elliptizität ε umfasst und das Verhältnis von Brennweite zu Radius nₛₜₗ = Rₛₜₗ/Fₛₜₗ der Stufenlinse (33, 43) grösser als 0,5 mal 1/ sqrt(ε²-1), vorzugsweise grösser als 0,7 mal 1/ sqrt(ε²-1), am bevorzugtesten grösser als 0,9 mal 1/ sqrt (ε²-1) .

7. Stufenlinsenscheinwerfer nach einem der vorstehenden Ansprüche, **dadurch gekennzeichnet, dass** der Reflektor (31, 41) aus einem metallischen oder transparenten, vorzugsweise dielektrischen Material, Glas und/oder Kunststoff besteht.

8. Stufenlinsenscheinwerfer nach einem der vorstehenden Ansprüche, bei welchem mindestens eine der beiden Hauptoberflächen des Reflektors (31, 41) mit einem System optisch dünner Schichten versehen ist.

9. Stufenlinsenscheinwerfer nach einem der vorstehenden Ansprüche, bei welchem die lichtreflektierende Oberfläche des Reflektors (31, 41), vorzugsweise Teilflächen oder Facetten aufweisend, lichtstreuend strukturiert ist und keine, eine oder zwei Oberflächen der Stufenlinse (33, 43) zusätzlich zur Streuscheibe lichtstreuend strukturiert sind.

10. Stufenlinsenscheinwerfer nach einem der vorstehenden Ansprüche, **dadurch gekennzeichnet, dass** ein Hilfsreflektor zwischen Stufenlinse und Reflektor angeordnet ist.

11. Stufenlinsenscheinwerfer nach einem der vorstehenden Ansprüche, **dadurch gekennzeichnet, dass** mit der Änderung der Grösse, insbesondere des Durchmessers, des auf die optische Anordnung auftreffenden Lichts der Öffnungswinkel (α, αₛₚ, α_{F1}) des aus der optischen Anordnung austretenden Lichts im Wesentlichen ohne Veränderung der Einfallswinkel des die optische Anordnung beleuchtenden Lichts, veränderbar, insbesondere einstellbar ist.

12. Stufenlinsenscheinwerfer nach einem der vorstehenden Ansprüche, **dadurch gekennzeichnet, dass** das Verhältnis der Oberflächengrösse von Stufenlinsenoberfläche zu Streuscheibenoberfläche grösser als 2 zu 1, vorzugsweise das Verhältnis der Oberflächengrösse von Stufenlinsenoberfläche zu Streuscheibenoberfläche grösser als 10 zu 1 und am bevorzugtesten das Verhältnis der Oberflächengrösse von Stufenlinseoberfläche zu Streuscheibenoberfläche grösser als 100 zu 1 ist.

13. Stufenlinsenscheinwerfer nach einem der vorstehenden Ansprüche, **dadurch gekennzeichnet, dass** der Öffnungswinkel des aus der Streuscheibe (37, 47) austretenden Lichts in vertikaler Richtung verschieden von dem Öffnungswinkel in horizontaler Richtung ist.

14. Stufenlinsenscheinwerfer nach einem der vorstehenden Ansprüche, **dadurch gekennzeichnet, dass** die Streuscheibe (37, 47) mehrere Bereiche, insbesondere ringförmige Oberflächenbereiche enthält, welche Licht jeweils in verschiedene Richtungen oder unterschiedlich stark streuen.

15. Stufenlinsenscheinwerfer nach einem der vorstehenden Ansprüche, **dadurch gekennzeichnet, dass** die Streuscheibe (37, 47) an der Lichtaustrittsfläche angeordnet ist.

16. Stufenlinsenscheinwerfer nach einem der vorstehenden Ansprüche 1 bis 16, **dadurch gekennzeichnet, dass** die Streuscheibe (37, 47) an der Lichteintrittsfläche angeordnet ist.

17. Optische Anordnung nach einem der vorstehenden Ansprüche, **dadurch gekennzeichnet, dass** jeweils eine Streuscheibe (37, 47) an der Lichteintrittsfläche und an der Lichtaustrittsfläche angeordnet ist.

18. Stufenlinsenscheinwerfer nach einem der vorstehenden Ansprüche, **dadurch gekennzeichnet, dass** die Streuscheibe (37, 47) verschieden stark streuende Bereiche aufweist, vorzugsweise einen mittig stärker streuenden und einen randseitig weniger stark streuenden Bereich aufweist.

19. Stufenlinsenscheinwerfer nach einem der vorstehenden Ansprüche, **dadurch gekennzeichnet, dass** die Streuscheibe (37, 47) mattiert und/oder durch Heissformgebung, insbesondere Prägen und/oder spritzgusstechnisch, hergestellt ist.

20. Stufenlinsenscheinwerfer nach einem der vorstehenden Ansprüche, **dadurch gekennzeichnet, dass** das Material der Stufenlinse (33, 43) und/oder der Streuscheibe (37, 47) Glas umfasst.

21. Stufenlinsenscheinwerfer nach einem der vorstehenden Ansprüche, **dadurch gekennzeichnet, dass** das Material der Stufenlinse (33, 43) und/oder der Streuscheibe (37, 47) glaskeramisches Material umfasst, insbesondere aus glaskeramischem Material besteht.

22. Stufenlinsenscheinwerfer nach einem der vorstehenden Ansprüche, **dadurch gekennzeichnet, dass** dessen optische Anordnung einstückig ausgebildet ist.

23. Stufenlinsenscheinwerfer nach einem der vorstehenden Ansprüche, **dadurch gekennzeichnet, dass** die Stufenlinse (33, 43) eine asphärische Linse ist.

24. Stufenlinsenscheinwerfer nach einem der Ansprüche von 1 bis 24, **dadurch gekennzeichnet, dass** die Stufenlinse (33, 43) eine sphärische Linse ist.

25. Stufenlinsenscheinwerfer nach einem der vorstehenden Ansprüche, **dadurch gekennzeichnet, dass** die Stufenlinse (33, 43) einen Grundkörper mit einer im Wesentlichen planen Oberfläche aufweist.

26. Stufenlinsenscheinwerfer nach einem der vorstehenden Ansprüche, **dadurch gekennzeichnet, dass** die Stufenlinse (33, 43) einen optisch strahlformend wirksamen Grundkörper mit einer im Wesentlichen konkaven sphärischen oder asphärischen Oberfläche aufweist.

27. Stufenlinsenscheinwerfer nach einem der vorstehenden Ansprüche von 1 bis 18, **dadurch gekennzeichnet, dass** die Stufenlinse (33, 43) einen optisch strahlformend wirksamen Grundkörper mit einer im Wesentlichen konvexen sphärischen oder asphärischen Oberfläche aufweist.

28. Stufenlinsenscheinwerfer nach einem der vorstehenden Ansprüche, **dadurch gekennzeichnet, dass** die im Wesentlichen ringförmigen, optisch wirksamen Oberflächen der Stufen als Kreisbogenabschnitte gestaltet sind.

29. Stufenlinsenscheinwerfer nach einem der vorstehenden Ansprüche von 1 bis 29, **dadurch gekennzeichnet, dass** die im Wesentlichen ringförmigen, optisch wirksamen Oberflächen der Stufen kegelmantelförmig ausgebildet sind.

30. Stufenlinsenscheinwerfer nach einem der vorstehenden Ansprüche von 1 bis 29, **dadurch gekennzeichnet, dass** die im Wesentlichen ringförmigen, optisch wirksamen Oberflächen der jeweiligen Stufen so geformt sind, dass eine in etwa ebene Welle mit zur optischen Achse senkrechten Phasenfronten in einem reellen Brennpunkt vereinigt wird oder in eine Kugelwelle umgeformt wird, deren Mittelpunkt in einem virtuellen Brennpunkt zu liegen scheint.

31. Optische Anordnung nach einem der vorstehenden Ansprüche, **dadurch gekennzeichnet, dass** das Material der Stufenlinsen (33, 43) und/oder der Streuscheibe (37, 47) Kunststoff umfasst.

32. Stufenlinsenscheinwerfer nach einem der vorstehenden Ansprüche, **dadurch gekennzeichnet, dass** dessen optische Anordnung mit Stufenlinse (33, 43) und Streuscheibe (37, 47) aus mehreren Elementen zusammengesetzt ist.

33. Stufenlinsenscheinwerfer nach einem der vorstehenden Ansprüche, **dadurch gekennzeichnet, dass** dessen optische Anordnung eine hybrider Verbund aus Glas und Kunststoff ist.

34. Stufenlinsenscheinwerfer nach einem der vorstehenden Ansprüche, **dadurch gekennzeichnet, dass** die Stufenlinse (33, 43) ein Material umfasst mit einem ersten Dispersionsverhalten und eine weitere Linse mit entgegengesetzter Brechkraft, vorzugsweise eine Stufenlinse mit einem Material mit einem zweiten Dispersionsverhalten derart vorgesehen ist, dass chromatische Aberrationen vermindert sind.

35. Stufenlinsenscheinwerfer nach einem der vorstehenden Ansprüche, **dadurch gekennzeichnet, dass** die Stufenlinse (33, 43) eine geprägte Linse, insbesondere eine Kunststofflinse ist, vorzugsweise mit einem optischen Weglängenunterschied an der jeweiligen Stufe von weniger als etwa 1000 optischen Wellenlängen.

36. Stufenlinsenscheinwerfer nach einem der vorstehenden Ansprüche, **dadurch gekennzeichnet, dass** die Stufenlinse (33, 43) auf einer ersten Seite und die Streuscheibe (37, 47) auf einer der ersten Seite gegenüberliegenden Seite ausgebildet oder angeordnet ist.

37. Stufenlinsenscheinwerfer nach einem der vorstehenden Ansprüche, **dadurch gekennzeichnet, dass** die um den zentralen kreisförmigen Abschnitt der Stufenlinse (33, 43) angeordneten ringförmigen Abschnitte im Wesentlichen die gleiche radiale Erstreckung aufweisen.

38. Stufenlinsenscheinwerfer nach einem der Ansprüche von 1 bis 38, **dadurch gekennzeichnet, dass** die stufenförmigen Erhebungen zumindest zweier benachbarter ringförmiger Abschnitte im Wesentlichen die gleiche Höhe haben.

39. Stufenlinsenscheinwerfer nach einem der vorstehenden Ansprüche, **dadurch gekennzeichnet, dass** zumindest die der Lichtquelle zugewandte Oberfläche der optischen Anordnung aus Glas besteht und vorgespannt, vorzugsweise thermisch vorgespannt ist.

40. Stufenlinsenscheinwerfer nach einem der vorstehenden Ansprüche, **dadurch gekennzeichnet, dass** die Stufenlinse(33, 43) und/oder die Streuscheibe (37, 47) als Filter, insbesondere als UV-, IR- oder farbiges Bandfilter und/oder Konversionsfilter ausgebildet ist/sind.

41. Stufenlinsenscheinwerfer nach einem der vorstehenden Ansprüche, **dadurch gekennzeichnet, dass** die Stufenlinse (33, 43) und/oder die Streuscheibe (37, 47) mit einer mechanischen Kratzschutzschicht und/oder einer Antireflexschicht beschichtet sind.

42. Stufenlinsenscheinwerfer nach einem der vorstehenden Ansprüche, mit einer Streuscheibe (37, 47), welche eine erste Oberfläche aufweist, die in Facetten (24) unterteilt ist, und bei der jeder Facette (24) eine Erhebung oder Vertiefung mit einer zweiten, gewölbt ausgebildeten Oberfläche zugeordnet ist, welche **dadurch gekennzeichnet ist, dass** die Facetten unterschiedliche geometrische Formen annehmen.

43. Stufenlinsenscheinwerfer nach Anspruch 42, **dadurch gekennzeichnet, dass** die Streuscheibe (37, 47) Facetten (24) mit einer polygonalen Randkontur aufweist.

44. Stufenlinsenscheinwerfer nach Anspruch 42, **dadurch gekennzeichnet, dass** die Streuscheibe (37, 47) Facetten (24) unterschiedlicher Flächeninhalte aufweist.

45. Stufenlinsenscheinwerfer nach Anspruch 42, 43, oder 44, **dadurch gekennzeichnet, dass** die Streuscheibe (37, 47) Facetten (24) in Form eines Drei-, Vier-, Fünf-, Sechs- und/oder Sieben--Ecks aufweist.

46. Stufenlinsenscheinwerfer nach einem der Ansprüche 42 bis 45,
**dadurch gekennzeichnet, dass** die Facetten (24) der Streuscheibe (37, 47) unterschiedliche Orientierungen aufweisen.

47. Stufenlinsenscheinwerfer nach einem der Ansprüche 42 bis 46,
**dadurch gekennzeichnet, dass** die Erhebungen oder Vertiefungen der Streuscheibe (37, 47) kalottenförmig ausgebildet sind.

48. Stufenlinsenscheinwerfer nach einem der Ansprüche 42 bis 47,
**dadurch gekennzeichnet, dass** die Höhe der Erhebungen und/oder die Tiefe der Vertiefungen der Streuscheibe (37, 47) unterschiedlich gewählt sind.

49. Stufenlinsenscheinwerfer nach Anspruch 43,
**dadurch gekennzeichnet, dass** die jeweiligen Scheitelpunkte (S) der Erhebungen oder Vertiefungen der Streuscheibe (37, 47) entlang einer Spirale angeordnet sind.

50. Stufenlinsenscheinwerfer nach Anspruch 49, **dadurch gekennzeichnet, dass** die Scheitelpunkte (S) auf einer Archimedischen Spirale angeordnet sind.

51. Stufenlinsenscheinwerfer nach Anspruch 49 oder 50, **dadurch gekennzeichnet, dass** die Bogenlänge (L) zwischen zwei benachbarten Scheitelpunkten (S) entlang der Spirale nahezu äquidistant ist.

52. Stufenlinsenscheinwerfer nach Anspruch 40 oder 41, **dadurch gekennzeichnet, dass** die Bogenlänge (L) zwischen zwei benachbarten Scheitelpunkten (S) entlang der Spirale variabel gestaltet ist.

53. Stufenlinsenscheinwerfer nach Anspruch 42, **dadurch gekennzeichnet, dass** die Streuscheibe einzelne relativ zueinander verdrehte Facetten (24) aufweist.

54. Stufenlinsenscheinwerfer nach Anspruch 42, **dadurch gekennzeichnet, dass** die Streuscheibe (37, 47) Facetten (24) aufweist, die durch ein Monte-Carlo-Verfahren aus deren regelmässiger Lage versetzt sind.

55. Stufenlinsenscheinwerfer nach einem der vorstehenden Ansprüche von 1 bis 41, **dadurch gekennzeichnet, dass** die Streuscheibe (37, 47) eine definierte Körnung aufweist, welche in einem mittleren Bereich feiner und mit zunehmender Entfernung von der Mitte grober wird.

56. Verwendung des Stufenlinsenscheinwerfers nach einem der vorstehenden Ansprüche für Medizin, Architektur, Film, Bühne, Studio und Fotografie.

57. Taschenlampe umfassend einen Stufenlinsenscheinwerfer nach einem der vorstehenden Ansprüche von 1 bis 55.

## Claims

1. Stepped lens spotlight having an adjustable aperture angle of the emerging light bundle having an ellipsoidal reflector (31, 41), a lamp (32) and at least one optical arrangement having a stepped lens (33, 43),
wherein either the stepped lens (33) comprises a real focal point which can be superimposed with a focal point of the reflector (31,41) which is remote from the reflector for a spot position of the stepped lens spotlight, or
wherein the stepped lens (33, 43) is a lens with a negative focal length and a virtual focal point which can be superimposed with a focal point of the reflector which is remote from the reflector for a spot position of the stepped lens spotlight, **characterised in that** the optical arrangement having a stepped lens (33, 43) comprises a diffusing screen (37, 47), wherein the diffusing screen (37, 47) is disposed in a first central region and the stepped lens (33, 43) is disposed in a second region and the first and second regions occupy surfaces, which are each concentrically disposed and have different diameters (2Rstl, 2RstrA), wherein in a flood position, a very high proportion of the light impinges only on a very small region in the centre of the diffusing screen (37, 47), and in the spot position, only a low portion of the entire light passes through the diffusing screen.

2. Stepped lens spotlight as claimed in Claim 1, **characterised in that** the stepped lens (33, 43) defines, with the diffusing screen (37, 47), a light mixing system which changes the proportion of scattered light relative to the proportion of light formed geometrically-optically, i.e., the light mixing ratio, in dependence upon the position of the stepped lens spotlight.

3. Stepped lens spotlight as claimed in any one of the preceding Claims, **characterised in that** the aperture angle of the from the [*sic*] stepped lens spotlight in the spot position is less than or equal to 8° and in the flood position is greater than or equal to 60°.

4. Stepped lens spotlight as claimed in any one of the preceding Claims,
**characterised in that** the aperture angle of the from the [*sic*] stepped lens spotlight in the spot position is less than or equal to 8° and in the flood position is greater than or equal to 70°.

5. Stepped lens spotlight as claimed in any one of the preceding Claims,
**characterised in that** the aperture angle of the from the [*sic*] stepped lens spotlight in the spot position is less than or equal to 8° and in the flood position is greater than or equal to 80°.

6. Stepped lens spotlight as claimed in any one of the preceding Claims,
**characterised in that** the stepped lens spotlight includes an elliptical reflector (31, 41) having an ellipticity ε and the ratio of focal length to radius n_{Stl} = Rₛₜₗ/F_{Stl} of the stepped lens (33, 43) is greater than 0.5 times 1/sqrt(ε²-1), preferably greater than 0.7 times 1/sqrt(ε²-1), most preferably greater than 0.9 times 1/sqrt(ε²-1 ).

7. Stepped lens spotlight as claimed in any one of the preceding Claims,
**characterised in that** the reflector (31, 41) consists of a metallic or transparent, preferably dielectric, material, glass and/or synthetic material.

8. Stepped lens spotlight as claimed in any one of the preceding Claims, wherein at least one of the two main surfaces of the reflector (31, 41) is provided with a system of optically thin layers.

9. Stepped lens spotlight as claimed in any one of the preceding Claims, wherein the light-reflecting surface of the reflector (31, 41), preferably comprising partial surfaces or facets, is structured so as to scatter light, and none, one or two surfaces of the stepped lens (33, 43) are structured so as to scatter light in addition to the diffusing screen.

10. Stepped lens spotlight as claimed in any one of the preceding Claims,
**characterised in that** an auxiliary reflector is disposed between the stepped lens and the reflector.

11. Stepped lens spotlight as claimed in any one of the preceding Claims,
**characterised in that** as the magnitude, in particular the diameter, of the light impinging on the optical arrangement changes, the aperture angle (α, α_{Sp}, α_{Fl}) of the light emerging from the optical arrangement can be substantially changed, in particular adjusted, without changing the angles of incidence of the light illuminating the optical arrangement.

12. Stepped lens spotlight as claimed in any one of the preceding Claims,
**characterised in that** the ratio of surface size of stepped lens surface to diffusing screen surface is greater than 2:1, preferably the ratio of surface size of stepped lens surface to diffusing screen surface is greater than 10:1 and most preferably the ratio of surface size of stepped lens surface to diffusing screen surface is greater than 100:1.

13. Stepped lens spotlight as claimed in any one of the preceding Claims,
**characterised in that** the aperture angle of the light emerging from the diffusing screen (37, 47) in the vertical direction is different from the aperture angle in the horizontal direction.

14. Stepped lens spotlight as claimed in any one of the preceding Claims,
**characterised in that** the diffusing screen (37, 47) contains several regions, in particular annular surface regions which each scatter light in different directions or to different extents.

15. Stepped lens spotlight as claimed in any one of the preceding Claims,
**characterised in that** the diffusing screen (37, 47) is disposed on the light exit surface.

16. Stepped lens spotlight as claimed in any one of the preceding Claims 1 to 16 [*sic*], **characterised in that** the diffusing screen (37, 47) is disposed on the light entry surface.

17. Optical arrangement [*sic*] as claimed in any one of the preceding Claims, **characterised in that** a diffusing screen (37. 47) is disposed in each case on the light entry surface and on the light exit surface.

18. Stepped lens spotlight as claimed in any one of the preceding Claims,
**characterised in that** the diffusing screen (37, 47) comprises regions which produce scattering effects of different strengths, preferably a region which produces a greater scattering effect centrally and a region which produces a weaker scattering effect marginally.

19. Stepped lens spotlight as claimed in any one of the preceding Claims,
**characterised in that** the diffusing screen (37, 47) is matted and/or produced by hot moulding, in particular embossing and/or using injection-moulding technology.

20. Stepped lens spotlight as claimed in any one of the preceding Claims,
**characterised in that** the material of the stepped lens (33, 43) and/or of the diffusing screen (37, 47) includes glass.

21. Stepped lens spotlight as claimed in any one of the preceding Claims,
**characterised in that** the material of the stepped lens (33, 43) and/or of the diffusing screen (37, 47) includes glass-ceramic material, in particular consists of glass-ceramic material.

22. Stepped lens spotlight as claimed in any one of the preceding Claims,
**characterised in that** its optical arrangement is formed in one piece.

23. Stepped lens spotlight as claimed in any one of the preceding Claims,
**characterised in that** the stepped lens (33, 43) is an aspherical lens.

24. Stepped lens spotlight as claimed in any one of Claims 1 to 24 [*sic*], **characterised in that** the stepped lens (33, 43) is a spherical lens.

25. Stepped lens spotlight as claimed in any one of the preceding Claims,
**characterised in that** the stepped lens (33, 43) comprises a basic body having a substantially planar surface.

26. Stepped lens spotlight as claimed in any one of the preceding Claims,
**characterised in that** the stepped lens (33, 43) comprises an optically beamforming basic body having a substantially concave spherical or aspherical surface.

27. Stepped lens spotlight as claimed in any one of the preceding Claims 1 to 18,
**characterised in that** the stepped lens (33, 43) comprises an optically beam-forming basic body having a substantially convex spherical or aspherical surface.

28. Stepped lens spotlight as claimed in any one of the preceding Claims,
**characterised in that** the substantially annular, optically effective surfaces of the steps are formed as circular arc sections.

29. Stepped lens spotlight as claimed in any one of the preceding Claims 1 to 29 [*sic*], **characterised in that** the substantially annular, optically effective surfaces of the steps are formed in the shape of conical surfaces.

30. Stepped lens spotlight as claimed in any one of the preceding Claims 1 to 29, **characterised in that** the substantially annular, optically effective surfaces of the respective steps are formed such that an approximately plane wave having phase fronts perpendicular to the optical axis is focussed in a real focal point or is transformed into a spherical wave whose centre point appears to lie in a virtual focal point.

31. Optical arrangement [*sic*] as claimed in any one of the preceding Claims,
**characterised in that** the material of the stepped lens (33, 43) and/or of the diffusing screen (37, 47) includes synthetic material.

32. Stepped lens spotlight as claimed in any one of the preceding Claims,
**characterised in that** its optical arrangement having a stepped lens (33, 43) and a diffusing screen (37, 47) is composed of several elements.

33. Stepped lens spotlight as claimed in any one of the preceding Claims,
**characterised in that** its optical arrangement is a hybrid composite of glass and synthetic material.

34. Stepped lens spotlight as claimed in any one of the preceding Claims,
**characterised in that** the stepped lens (33, 43) includes a material having a first dispersion behaviour, and a further lens having an opposed refractive power, preferably a stepped lens having a material having a second dispersion behaviour is provided such that chromatic aberrations are reduced.

35. Stepped lens spotlight as claimed in any one of the preceding Claims,
**characterised in that** the stepped lens (33, 43) is an embossed lens, in particular a synthetic material lens, preferably having an optical path length difference at the respective step of less than approximately 1000 optical wavelengths.

36. Stepped lens spotlight as claimed in any one of the preceding Claims,
**characterised in that** the stepped lens (33, 43) is formed or disposed on a first side and the diffusing screen (37, 47) is formed or disposed on a side opposite the first side.

37. Stepped lens spotlight as claimed in any one of the preceding Claims,
**characterised in that** the annular sections disposed around the central circular section of the stepped lens (33. 43) have substantially the same radial extension.

38. Stepped lens spotlight as claimed in any one of Claims I to 38 [*sic*]*,* **characterised in that** the step-shaped elevations of at least two adjacent annular sections have substantially the same height.

39. Stepped lens spotlight as claimed in any one of the preceding Claims, **characterised in that** at least the surface of the optical arrangement facing the light source consists of glass and is pre-stressed, preferably thermally pre-stressed.

40. Stepped lens spotlight as claimed in any one of the preceding Claims, **characterised in that** the stepped lens (33, 43) and/or the diffusing screen (37, 47) is/are formed as filters, in particular as UV, IR or coloured band-pass filters and/or conversion filters.

41. Stepped lens spotlight as claimed in any one of the preceding Claims, **characterised in that** the stepped lens (33, 43) and/or the diffusing screen (37, 47) are coated with a mechanical anti-scratch layer and/or an anti-reflection layer.

42. Stepped lens spotlight as claimed in any one of the preceding Claims, having a diffusing screen (37, 47) which comprises a first surface which is divided into facets (24), and wherein each facet (24) is allocated an elevation or depression having a second surface formed in a curved manner, which is **characterised in that** the facets assume different geometric shapes.

43. Stepped lens spotlight as claimed in Claim 42, **characterised in that** the diffusing screen (37, 47) comprises facets (24) having a polygonal edge contour.

44. Stepped lens spotlight as claimed in Claim 42, **characterised in that** the diffusing screen (37, 47) comprises facets (24) having different areas.

45. Stepped lens spotlight as claimed in Claim 42, 43 or 44, **characterised in that** the diffusing screen (37, 47) comprises facets (24) in the form of a triangle, quadrilateral, pentagon, hexagon and/or heptagon.

46. Stepped lens spotlight as claimed in any one of Claims 42 to 45, **characterised in that** the facets (24) of the diffusing screen (37, 47) have different orientations.

47. Stepped lens spotlight as claimed in any one of Claims 42 to 46, **characterised in that** the elevations or depressions of the diffusing screen (37, 47) are formed in the shape of spherical caps.

48. Stepped lens spotlight has claimed in any one of Claims 42 to 47, **characterised in that** the height of the elevations and/or the depth of the recesses of the diffusing screen (37, 47) are selected to be different.

49. Stepped lens spotlight as claimed in Claim 43, **characterised in that** the respective vertices (S) of the elevations or depressions of the diffusing screen (37, 47) are arranged along a spiral.

50. Stepped lens spotlight as claimed in Claim 49, **characterised in that** the vertices (S) are arranged on an Archimedean spiral.

51. Stepped lens spotlight as claimed in Claim 49 or 50, **characterised in that** the arc length (L) between two adjacent vertices (S) along the spiral is approximately equidistant.

52. Stepped lens spotlight as claimed in Claim 40 or 41, **characterised in that** the arc length (L) between two adjacent vertices (S) along the spiral is designed to be variable.

53. Stepped lens spotlight as claimed in Claim 42, **characterised in that** the diffusing screen comprises individual facets (24) which are rotated relative to each other.

54. Stepped lens spotlight as claimed in Claim 42, **characterised in that** the diffusing screen (37, 47) comprises facets (24) which are offset from their regular position by means of a Monte Carlo method.

55. Stepped lens spotlight as claimed in any one of the preceding Claims 1 to 41, **characterised in that** the diffusing screen (37, 47) has a defined granularity which becomes finer in a central region and coarser as the distance from the centre increases.

56. Use of the stepped lens spotlight as claimed in any one of the preceding Claims for medicine, architecture, film, theatre, studio and photography.

57. Torch including a stepped lens spotlight as claimed in any one of the preceding Claims 1 to 55.

## Revendications

1. Projecteur à lentille de Fresnel doté d'un angle d'ouverture réglable du faisceau de lumière sortant avec un réflecteur (31, 41) ellipsoïdal, une lampe (32) et au moins un dispositif optique avec lentille de Fresnel (33, 43),
la lentille de Fresnel (33) présentant un foyer réel, qui peut être superposé avec un foyer éloigné du réflecteur (31, 41) pour une position de spot du projecteur à lentille de Fresnel ou
la lentille de Fresnel (33, 43) étant une lentille à focale négative et foyer virtuel, lequel peut être superposé avec un foyer, éloigné du réflecteur, du réflecteur pour une position de spot du projecteur à lentille de Fresnel
**caractérisé en ce que** le dispositif optique avec lentille de Fresnel (33, 43) présente un disque diffuseur (37, 47), le disque diffuseur (37, 47) étant disposé dans une première zone centrale et la lentille de Fresnel (33, 43) dans une seconde zone et la première et la seconde zone occupant à chacune des surfaces disposées de façon concentrique avec différents diamètres (2Rst1, 2RstrA), une fraction très élevée de la lumière arrivant dans une position de flood seulement sur une zone très petite au centre du disque diffuseur (37, 47), et seule une faible fraction de l'ensemble de la lumière passant à travers le disque diffuseur dans la position de spot.

2. Projecteur à lentille de Fresnel selon la revendication 1, **caractérisé en ce que** la lentille de Fresnel (33, 43) définit avec le disque diffuseur (37, 47) un système de mélange de lumière qui modifie la fraction de la lumière diffusée par rapport à la fraction de la lumière représentée au plan géométrique et optique, donc le rapport de mélange de lumière, en fonction de la position du projecteur à lentille de Fresnel.

3. Projecteur à lentille de Fresnel selon l'une quelconque des revendications précédentes, **caractérisé en ce que** l'angle d'ouverture de la lumière sortant du projecteur à lentille de Fresnel en position spot est inférieur ou égal à 8° et en position flood supérieur ou égal à 60°.

4. Projecteur à lentille de Fresnel selon l'une quelconque des revendications précédentes, **caractérisé en ce que** l'angle d'ouverture de la lumière sortant du projecteur à lentille de Fresnel en position spot est inférieur ou égal à 8° et en position flood supérieur ou égal à 70°.

5. Projecteur à lentille de Fresnel selon l'une quelconque des revendications précédentes, **caractérisé en ce que** l'angle d'ouverture de la lumière sortant du projecteur à lentille de Fresnel en position spot est inférieur ou égal à 8° et en position flood supérieur ou égal 80°.

6. Projecteur à lentille de Fresnel selon l'une quelconque des revendications précédentes, **caractérisé en ce que** le projecteur à lentille de Fresnel comprend un réflecteur (31, 41) elliptique avec une ellipticité ε et le rapport entre la focale et le rayon nₛₜ₁ = Rₛₜ₁/Fₛₜ₁ de la lentille de Fresnel (33, 43) est supérieur à 0,5 fois 1/sqrt(ε²-1), de préférence supérieur à 0,7 fois 1/sqrt(ε²-1), avec une plus grande préférence supérieur à 0,9 fois 1/sqrt (ε²-1).

7. Projecteur à lentille de Fresnel selon l'une quelconque des revendications précédentes, **caractérisé en ce que** le réflecteur (31, 41) est à base d'un matériau métallique ou transparent, de préférence diélectrique, de verre et/ou de plastique.

8. Projecteur à lentille de Fresnel selon l'une quelconque des revendications précédentes, sur lequel au moins l'une des deux surfaces principales du réflecteur (31, 41) est dotée d'un système de couches visuellement minces.

9. Projecteur à lentille de Fresnel selon l'une quelconque des revendications précédentes, sur lequel la surface réfléchissant la lumière du réflecteur (31, 41), présentant de préférence des surfaces partielles ou des facettes, est structurée de façon diffusante et aucune n'est, une ou deux surfaces de la lentille de Fresnel (33, 43) sont, structurées de façon diffusante en supplément du disque diffuseur.

10. Projecteur à lentille de Fresnel selon l'une quelconque des revendications précédentes, **caractérisé en ce qu'**un réflecteur auxiliaire est disposé entre la lentille de Fresnel et le réflecteur.

11. Projecteur à lentille de Fresnel selon l'une quelconque des revendications précédentes, **caractérisé en ce que** l'angle d'ouverture (α, αₛₚ, α_{F1}) de la lumière sortant du dispositif optique est variable, en particulier réglage, avec la variation de la grandeur, en particulier du diamètre, de la lumière arrivant sur le dispositif optique principalement sans variation des angles d'incidence de la lumière éclairant le dispositif optique.

12. Projecteur à lentille de Fresnel selon l'une quelconque des revendications précédentes, **caractérisé en ce que** le rapport entre la grandeur de surface de la surface à lentille de Fresnel et la surface du disque diffuseur est supérieur à 2/1, de préférence le rapport entre la grandeur de surface de la surface à lentille de Fresnel et la surface du disque diffuseur est supérieur à 10/1 et avec la plus grande préférence le rapport entre la grandeur de surface de la surface à lentille de Fresnel et la surface du disque diffuseur est supérieur à 100/1.

13. Projecteur à lentille de Fresnel selon l'une quelconque des revendications précédentes, **caractérisé en ce que** l'angle d'ouverture de la lumière sortant du disque diffuseur (37, 47) dans le sens vertical est différent de l'angle d'ouverture dans le sens horizontal.

14. Projecteur à lentille de Fresnel selon l'une quelconque des revendications précédentes, **caractérisé en ce que** le disque diffuseur (37, 47) contient plusieurs zones, en particulier des zones de surface de forme annulaire, qui diffusent de la lumière à chaque fois dans différentes directions ou avec une intensité différente.

15. Projecteur à lentille de Fresnel selon l'une quelconque des revendications précédentes, **caractérisé en ce que** le disque diffuseur (37, 47) est disposé sur la surface de sortie de lumière.

16. Projecteur à lentille de Fresnel selon l'une quelconque des revendications précédentes 1 à 15, **caractérisé en ce que** le disque diffuseur (37, 47) est disposé sur la surface d'entrée de lumière.

17. Dispositif optique selon l'une quelconque des revendications précédentes, **caractérisé en ce qu'**à chaque fois un disque diffuseur (37, 47) est disposé sur la surface d'entrée de lumière et sur la surface de sortie de lumière.

18. Projecteur à lentille de Fresnel selon l'une quelconque des revendications précédentes, **caractérisé en ce que** le disque diffuseur (37, 47) présente des zones diffusant avec une intensité différente, de préférence une zone diffusant plus fortement au centre et une zone diffusant moins fortement côté bord.

19. Projecteur à lentille de Fresnel selon l'une quelconque des revendications précédentes, **caractérisé en ce que** le disque diffuseur (37, 47) est fabriqué de façon dépolie et/ou par un façonnage à chaud, en particulier par estampage et/ou moulage par injection.

20. Projecteur à lentille de Fresnel selon l'une quelconque des revendications précédentes, **caractérisé en ce que** le matériau de la lentille de Fresnel (33, 43) et/ou du disque diffuseur (37, 47) comprend du verre.

21. Projecteur à lentille de Fresnel selon l'une quelconque des revendications précédentes, **caractérisé en ce que** le matériau de la lentille de Fresnel (33, 43) et/ou du disque diffuseur (37, 47) comprend du matériau vitrocéramique, en particulier est à base de matériau vitrocéramique.

22. Projecteur à lentille de Fresnel selon l'une quelconque des revendications précédentes, **caractérisé en ce que** son agencement optique est conçu d'une seule pièce.

23. Projecteur à lentille de Fresnel selon l'une quelconque des revendications précédentes, **caractérisé en ce que** la lentille de Fresnel (33, 43) est une lentille asphérique.

24. Projecteur à lentille de Fresnel selon l'une quelconque des revendications de 1 à 23, **caractérisé en ce que** la lentille de Fresnel (33, 43) est une lentille sphérique.

25. Projecteur à lentille de Fresnel selon l'une quelconque des revendications précédentes, **caractérisé en ce que** la lentille de Fresnel (33, 43) présente un corps de base avec une surface sensiblement plane.

26. Projecteur à lentille de Fresnel selon l'une quelconque des revendications précédentes, **caractérisé en ce que** la lentille de Fresnel (33, 43) présente un corps de base avec effet de conformation de faisceau au plan optique avec une surface sphérique ou asphérique sensiblement concave.

27. Projecteur à lentille de Fresnel selon l'une quelconque des revendications précédentes 1 à 18, **caractérisé en ce que** la lentille de Fresnel (33, 43) présente un corps de base à effet de conformation de faisceau au plan optique avec une surface sphérique ou asphérique sensiblement convexe.

28. Projecteur à lentille de Fresnel selon l'une quelconque des revendications précédentes, **caractérisé en ce que** les surfaces sensiblement annulaires, à effet optique, des niveaux sont conçues sous forme de parties d'arc de cercle.

29. Projecteur à lentille de Fresnel selon l'une quelconque des revendications précédentes 1 à 28, **caractérisé en ce que** les surfaces sensiblement de forme annulaire, à effet optique, des niveaux sont conçues en forme de génératrice de cône.

30. Projecteur à lentille de Fresnel selon l'une quelconque des revendications précédentes 1 à 29, **caractérisé en ce que** les surfaces de forme sensiblement annulaire, à effet optique, des niveaux respectifs sont formées de telle sorte qu'un arbre sensiblement plan est associé avec des fronts de phase perpendiculaires à l'axe optique dans un foyer réel ou est transformé en un arbre sphérique, dont le centre semble se situer dans un foyer virtuel.

31. Agencement optique selon l'une quelconque des revendications précédentes, **caractérisé en ce que** le matériau de la lentille de Fresnel (33, 43) et/ou du disque diffuseur (37, 47) comprend de la matière plastique.

32. Projecteur à lentille de Fresnel selon l'une quelconque des revendications précédentes, **caractérisé en ce que** son agencement optique avec lentille de Fresnel (33, 43) et disque diffuseur (37, 47) est composé de plusieurs éléments.

33. Projecteur à lentille de Fresnel selon l'une quelconque des revendications précédentes, **caractérisé en ce que** son agencement optique est un composite hybride de verre et de matière plastique.

34. Projecteur à lentille de Fresnel selon l'une quelconque des revendications précédentes, **caractérisé en ce que** la lentille de Fresnel (33, 43) comprend un matériau avec un premier comportement à la dispersion et une autre lentille avec un pouvoir de réfraction opposé, de préférence une lentille de Fresnel avec un matériau avec un second comportement à la dispersion de telle sorte que des aberrations chromatiques sont réduites.

35. Projecteur à lentille de Fresnel selon l'une quelconque des revendications précédentes, **caractérisé en ce que** la lentille de Fresnel (33, 43) est une lentille estampée, en particulier une lentille plastique, de préférence avec une différence de longueur d'onde optique sur le niveau respectif de moins d'environ 1000 longueurs d'ondes optiques.

36. Projecteur à lentille de Fresnel selon l'une quelconque des revendications précédentes, **caractérisé en ce que** la lentille de Fresnel (33, 43) est conçue ou disposée sur un premier côté et le disque diffuseur (37, 47) est conçu ou disposé sur un côté opposé au premier côté.

37. Projecteur à lentille de Fresnel selon l'une quelconque des revendications précédentes, **caractérisé en ce que** les tronçons de forme annulaire, disposés autour du tronçon circulaire central, de la lentille de Fresnel (33, 43) présentent sensiblement la même extension radiale.

38. Projecteur à lentille de Fresnel selon l'une quelconque des revendications de 1 à 37, **caractérisé en ce que** les élévations en forme de niveau d'au moins deux tronçons annulaires voisins présentent sensiblement la même hauteur.

39. Projecteur à lentille de Fresnel selon l'une quelconque des revendications précédentes, **caractérisé en ce qu'**au moins la surface, tournée vers la source de lumière, de l'agencement optique est en verre et précontrainte, de préférence précontrainte thermiquement.

40. Projecteur à lentille de Fresnel selon l'une quelconque des revendications précédentes, **caractérisé en ce que** la lentille de Fresnel (33, 43) et/ou le disque diffuseur (37, 47) est/sont conçu(s) sous forme de filtre, en particulier sous forme de filtre à bande UV, infrarouge ou couleur et/ou de filtre de conversion.

41. Projecteur à lentille de Fresnel selon l'une quelconque des revendications précédentes, **caractérisé en ce que** la lentille de Fresnel (33, 43) et/ou le disque diffuseur (37, 47) sont recouverts d'une couche mécanique de protection contre les éraflures et/ou d'une couche antireflet.

42. Projecteur à lentille de Fresnel selon l'une quelconque des revendications précédentes, comprenant un disque diffuseur (37, 47) qui présente une première surface, qui est subdivisée en facettes (24), et sur laquelle une élévation ou une cavité avec une seconde surface conçue incurvée est attribuée à chaque facette (24), laquelle surface est **caractérisée en ce que** les facettes présentent différentes formes géométriques.

43. Projecteur à lentille de Fresnel selon la revendication 42, **caractérisé en ce que** le disque diffuseur (37, 47) présente des facettes (24) avec un contour de bord polygonal.

44. Projecteur à lentille de Fresnel selon la revendication 42, **caractérisé en ce que** le disque diffuseur (37, 47) présente des facettes (24) avec des contenus de surface différents.

45. Projecteur à lentille de Fresnel selon la revendication 42, 43 ou 44, **caractérisé en ce que** le disque diffuseur (37, 47) présente des facettes (24) sous forme d'un triangle, d'un carré, d'un pentagone, d'un hexagone et/ou d'un heptagone.

46. Projecteur à lentille de Fresnel selon l'une quelconque des revendications 42 à 45,
**caractérisé en ce que** les facettes (24) du disque diffuseur (37, 47) présentent différentes orientations.

47. Projecteur à lentille de Fresnel selon l'une quelconque des revendications 42 à 46, **caractérisé en ce que** les élévations ou cavités du disque diffuseur (37, 47) sont conçues en forme de calottes.

48. Projecteur à lentille de Fresnel selon l'une quelconque des revendications 42 à 47, **caractérisé en ce que** la hauteur des élévations et/ou la profondeur des cavités du disque diffuseur (37, 47) sont choisies différentes.

49. Projecteur à lentille de Fresnel selon la revendication 43, **caractérisé en ce que** les sommets (S) respectifs des élévations ou cavités du disque diffuseur (27, 47) sont disposés le long d'une spirale.

50. Projecteur à lentille de Fresnel selon la revendication 49, **caractérisé en ce que** les sommets (S) sont disposés sur une spirale d'Archimède.

51. Projecteur à lentille de Fresnel selon la revendication 49 ou 50, **caractérisé en ce que** la longueur d'arc (L) entre deux sommets (S) voisins est pratiquement équidistante.

52. Projecteur à lentille de Fresnel selon la revendication 40 ou 41, **caractérisé en ce que** la longueur d'arc (L) entre deux sommets (S) voisins est conçue de façon variable le long de la spirale.

53. Projecteur à lentille de Fresnel selon la revendication 42, **caractérisé en ce que** le disque diffuseur présente des facettes (24) individuelles tournées les unes par rapport aux autres.

54. Projecteur à lentille de Fresnel selon la revendication 42, **caractérisé en ce que** le disque diffuseur (37, 47) présente des facettes (24), qui sont décalées par un procédé de Monte-Carlo à partir de leur position régulière.

55. Projecteur à lentille de Fresnel selon l'une quelconque des revendications précédentes 1 à 41, **caractérisé en ce que** le disque diffuseur (37, 47) présente une granulation définie qui est plus fine dans une zone centrale et devient plus grosse avec l'élévation de la distance au centre.

56. Utilisation du projecteur à lentille de Fresnel selon l'une quelconque des revendications précédentes pour la médecine, l'architecture, le cinéma, le théâtre, le studio et la photographie.

57. Lampe de poche comprenant un projecteur à lentille de Fresnel selon l'une quelconque des revendications précédentes 1 à 55.
